# EUROPEAN PATENT APPLICATION

(11) **EP 4 633 230 A1**
(43) Date of publication of application: **15.10.2025**
(21) Application number: 23909211.7
(22) Date of filing: 22.08.2023
(51) Int. Cl.: H04W 24/10

(54) **COMMUNICATION METHOD**

(30) Priority: 29.12.2022 CN 202211711982
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Thun, Clemens
(86) International application number: PCT/CN2023/114275
(87) International publication number: WO 2024/139271

(57) **Abstract**

This application provides a communication method. A sending-end device implementing the method may obtain time-related information of to-be-sent data, for example, a timestamp representing issuing the to-be-sent data to a protocol layer, and timer duration representing waiting time of the to-be-sent data at the protocol layer. A sending end may trigger a delay-related information report or delay-related information reporting when the time-related information satisfies a preset condition. The sending end may send the time-related information or other information that represents a remaining delay of a packet and that is obtained according to the time-related information to a receiving end, so that the receiving end can sense a remaining delay of a service of the sending end, thereby avoiding timeout.

## Description

This application claims priority to Chinese Patent Application No. 202211711982.6, entitled "COMMUNICATION METHOD" filed with the China National Intellectual Property Administration on December 29, 2022, which is incorporated herein by reference in its entirety.

### TECHNICAL FIELD

This application relates to the field of communication, and in particular, to a communication method.

### BACKGROUND

In current communication systems, some communication services (for example, an eXtended Reality (XR) service and a cloud gaming (CG) service) have relatively strict requirements on a delay, and a large amount of data bursts. Therefore, the communication services have requirements on low delay and high throughput. Each piece of data has a packet delay requirement during transmission, that is, data needs to be successfully transmitted within a determined delay requirement range. If the data cannot be transmitted according to an agreed time, the data is discarded. Therefore, if the data cannot be transmitted within the agreed time, the data is not transmitted at a radio interface within the agreed time, capacity of the service is reduced.

A solution provides: time-related information of a service is reported, so that a network side senses a remaining delay of a service on a UE side, to allocate a resource in time to a service with a relatively small remaining delay, and avoid discarding of the service because a transmission delay exceeds a delay requirement, thereby increasing the capacity. A specific solution of how to trigger delay reporting is not discussed in current standards. If services and data streams are not distinguished from each other to trigger, data streams that are insensitive to delays may possibly be triggered to report the delays. In this case, these services and data streams do not need to report the delays. If the delays are reported for these services, a waste of radio interface resources may be caused. In addition, for a service that is sensitive to a delay, the delay does not need to be reported at any time. The delay is reported only when required, which is more beneficial to scheduling resources and saving radio interface resources. Therefore, it is urgent to provide a method for triggering time-related information reporting for a service, which not only meet a requirement of the network side for sensing the remaining delay of the service on the UE side, but also can avoid the waste of the radio interface resources as much as possible.

### SUMMARY

According to a first aspect, this application provides a communication method. The method includes: obtaining time-related information of a first granularity; obtaining whether the time-related information satisfies a first condition; triggering a delay-related information report or delay-related information reporting when the time-related information satisfies a first condition; or generating or indicating first indication information when the time-related information satisfies the first condition, where the first indication information indicates the first condition or satisfies the first condition.

In an implementation, the first granularity is an RLC entity or an LCH, or an RLC entity group or an LCH group, or a data burst, or a PDU set, or a DRB, or a QoS flow, or a PDU, or an SDU.

The time-related information includes at least one piece of the following information: duration of a first timer, where the first timer is started when a second granularity is obtained; a sum of the duration of the first timer and first duration; caching duration of a packet of the first granularity; state information of the first timer; a first timestamp, where the first timestamp is a timestamp when the second granularity is obtained; a difference between current time information and the first timestamp; a sum of the first timestamp and first information; and the current time information.

In an implementation, the duration of the first timer is duration from starting to stopping or ending of the first timer, or the duration of the first timer is duration configured by the first timer, or the duration of the first timer is duration of running or starting of the first timer. The first duration is a configured or received threshold or fixed value. Configuring refers to that a receiving end configures the first duration, and receiving refers to that an entity (a protocol layer) of a sending end receives the first duration sent by another entity (a protocol layer), or receives the first duration sent by the receiving end. Caching duration of a packet of the first granularity is duration that the packet arrives at a protocol layer of the sending end and then is transmitted to a next layer, or the caching duration of the packet of the first granularity is duration that a protocol layer of the sending end receives the packet and then transmits the packet to a next layer. In an implementation, the caching duration of the packet of the first granularity is duration from starting to ending of the first timer, or a time difference between the first timestamp and a second timestamp.

In an implementation, the first granularity is the same as the second granularity. In an implementation, the first granularity is different from the second granularity. Optionally, the first granularity includes the second granularity.

In an implementation, the delay-related information is the same as the time-related information, that is, after triggering, the sending end directly sends the obtained time-related information to the receiving end, to indicate a remaining delay of the packet. In an implementation, the delay-related information is different from the time-related information. The delay-related information may be determined according to time. That is, after triggering, the sending end obtains the delay-related information through calculation or processing according to the obtained time-related information, and then sends the foregoing delay-related information to the receiving end.

In an implementation, obtaining refers to that a protocol layer in the sending end obtains the time-related information from another protocol layer or entity. In an implementation, obtaining refers to that a protocol layer in the sending end obtains the time-related information through an apparatus for detecting the time-related information set by the protocol layer in the sending end.

In an implementation, the first condition is a condition that is set based on the time-related information of the first granularity and that indicates whether a delay of the first granularity approaches a threshold.

The first condition is at least one of the following: the time-related information is greater than or equal to a first threshold; an interval between second information and the time-related information is less than or equal to a second threshold; the time-related information reaches a time indicated by second time information, where the second time information is obtained based on a timestamp when the second granularity is obtained and/or a third threshold; the time-related information is greater than or equal to the second time information; an interval between the time-related information and the second time information is less than or equal to the second threshold; and the time-related information stops or times out.

In an implementation, the first threshold, the second information, the second threshold, and the third threshold are configured by a receiving end. In an implementation, the first threshold, the second threshold, and the third threshold are set by the sending end according to a delay requirement of the packet, or received by an entity (a protocol layer) of the sending end and sent by another entity (a protocol layer). One or more of the first threshold, the second information, the second threshold, and the third threshold are configured by a receiving end 20, and the other one or more of the first threshold, the second information, the second threshold, and the third threshold are set by a sending end 10 according to the delay requirement of the packet, and/or, received by an entity (a protocol layer) of the sending end 10 and sent by another entity (a protocol layer). The first threshold and the third threshold may be the same or may be different.

In an implementation, the second time information is obtained through a difference between a timestamp when the first granularity is received and/or a third threshold.

In an implementation, the indicating the first indication information includes: a protocol layer in the sending end transmits the first indication information to another protocol layer, or a protocol layer in the sending end notifies another protocol layer of the first indication information. In an implementation, the indicating the first indication information includes: the sending end 10 indicates the first indication information to the receiving end. The foregoing indicating further includes transmitting and/or notifying.

With reference to the method provided in the first aspect, in some embodiments, after triggering the delay-related information report or the delay-related information reporting, the method further includes: indicating second indication information, where the second indication information indicates to trigger the delay-related information report or the delay-related information reporting.

In an implementation, the indicating the second indication information includes: a protocol layer in the sending end transmits the second indication information to another protocol layer, or a protocol layer in the sending end notifies another protocol layer of the second indication information. In an implementation, the indicating the second indication information includes: the sending end 10 indicates the second indication information to the receiving end. The foregoing indicating further includes transmitting and/or notifying.

With reference to the method provided in the first aspect, in some embodiments, the method further includes: obtaining whether a first object is configured with a delay-related information report or delay-related information reporting; the triggering a delay-related information report or delay-related information reporting when the time-related information satisfies a first condition specifically includes: triggering the delay-related information report or the delay-related information reporting when the time-related information satisfies the first condition and the first object is configured with the delay-related information report or the delay-related information reporting; and the generating or indicating first indication information when the time-related information satisfies the first condition specifically includes: generating or indicating the first indication information when the time-related information satisfies the first condition and the first object is configured with the delay-related information report or the delay-related information reporting.

In some embodiments, the obtaining whether a first object is configured with a delay-related information report or delay-related information reporting specifically includes: determining, through configuration information, whether the first object is configured with the delay-related information report or the delay-related information reporting, and/or, determining, through configuration state information indicated by the first object, whether the first object is configured with the delay-related information report or the delay-related information reporting.

In an implementation, the configuration information is obtained from the receiving end.

In an implementation, the delay-related information report or the delay-related information reporting is not triggered when the first object is not configured with the time-related information report or the time-related information, and when the first condition is satisfied.

In an implementation, the first timer is stopped when the first object is not configured with the time-related information report or the time-related information.

In an implementation, the first object includes at least one of an entity, a protocol layer, a path, a link, a channel, a bearer, and a set.

With reference to the method in the foregoing embodiments, in some embodiments, the method further includes: obtaining whether the packet of the first granularity is submitted to the first object; the obtaining whether a first object is configured with a delay-related information report or delay-related information reporting specifically includes: obtaining whether the first object is configured with the delay-related information report or the delay-related information reporting when the packet of the first granularity is submitted to the first object; or obtaining the first object, and obtaining whether the first object is configured with the delay-related information report or the delay-related information reporting when the packet of the first granularity is not submitted to the first object.

In a possible implementation, the method further includes: stopping the first timer after obtaining that the first object is not configured with the delay-related information report or the delay-related information reporting.

According to a second aspect, this application provides a communication method. The method includes: triggering a delay-related information report or delay-related information reporting of a third granularity when data of a first granularity is obtained.

In an implementation, the first granularity is an RLC entity or an LCH, or an RLC entity group or an LCH group, or a data burst, or a PDU set, or a DRB, or a QoS flow, or a PDU, or an SDU. The data includes at least one SDU or PDU.

In an implementation, the first granularity is the same as the third granularity. In an implementation, the first granularity is different from the third granularity. In an implementation, the first granularity is included in the third granularity. The third granularity further includes a plurality of other first granularities.

In an implementation, obtaining first data of the first granularity is obtained includes that there is data arriving at or available for the first granularity.

The time-related information includes at least one piece of the following information: duration of a first timer, where the first timer is started when a second granularity is obtained; a sum of the duration of the first timer and first duration; caching duration of a packet of the first granularity; state information of the first timer; a first timestamp, where the first timestamp is a timestamp when the second granularity is obtained; a difference between current time information and the first timestamp; a sum of the first timestamp and first information; and the current time information.

In an implementation, the first granularity is the same as the second granularity. In an implementation, the first granularity is different from the second granularity. Optionally, the first granularity includes the second granularity.

In an implementation, the delay-related information is the same as the time-related information, that is, after triggering, the sending end directly sends the obtained time-related information to the receiving end, to indicate a remaining delay of the packet. In an implementation, the delay-related information is different from the time-related information. The delay-related information may be determined according to time. That is, after triggering, the sending end obtains the delay-related information through calculation or processing according to the obtained time-related information, and then sends the foregoing delay-related information to the receiving end.

In an implementation, the duration of the first timer is duration from starting to stopping or ending of the first timer, or the duration of the first timer is duration configured by the first timer, or the duration of the first timer is duration of running or starting of the first timer. The first duration is a configured or received threshold or fixed value. Configuring refers to that a receiving end configures the first duration, and receiving refers to that an entity (a protocol layer) of a sending end receives the first duration sent by another entity (a protocol layer), or receives the first duration sent by the receiving end. In an implementation, the caching duration of the packet of the first granularity is duration that the packet arrives at a protocol layer of the sending end and then is transmitted to a next layer, or the caching duration of the packet of the first granularity is duration that a protocol layer of the sending end receives the packet and then transmits the packet to a next layer. In an implementation, the caching duration of the packet of the first granularity is duration from starting to ending of the first timer, or a time difference between the first timestamp and a second timestamp.

With reference to the method provided in the second aspect, in some embodiments, the method further includes: obtaining whether a second object is configured with a delay-related information report or delay-related information reporting; and the triggering a delay-related information report or a delay-related information reporting of a third granularity when data of a first granularity is obtained specifically includes: triggering the delay-related information report or the delay-related information reporting of the first granularity when the data of the first granularity is obtained, and the second object is configured with the delay-related information report or the delay-related information reporting.

In an implementation, the second object includes at least one of an entity, a protocol layer, a path, a link, a channel, a bearer, and a set. Optionally, the first granularity includes at least one second object. Optionally, the first granularity may be the second object.

With reference to the method provided in the second aspect, in some embodiments, the method further includes: determining whether a second timer runs, supporting triggering the delay-related information report or the delay-related information reporting when the second timer stops, does not run, or times out, and not supporting triggering the delay-related information report or the delay-related information reporting when the second timer runs; and the triggering a delay-related information report or delay-related information reporting of a third granularity when data of a first granularity is obtained specifically includes: triggering the delay-related information report or the delay-related information reporting of the third granularity when the data of the first granularity is obtained, and the second timer stops, does not run, or times out.

In some embodiments, the delay-related information report or the delay-related information reporting of the third granularity is not triggered when the data of the first granularity is obtained but the second timer runs.

In some embodiments, the second timer is waited to stop when the data of the first granularity is obtained and the second timer runs; and the delay-related information report or the delay-related information reporting of the third granularity is triggered after the second timer stops.

In some embodiments, after the triggering, the second timer is restarted, and the second timer stops or times out after preset timing duration ends. In some embodiments, the second timer is configured based on the first granularity. In some embodiments, when the first granularity is different from the third granularity, the second timer may alternatively be configured based on the third granularity.

With reference to the method provided in the second aspect, in some embodiments, the method further includes: determining whether a second timer runs, supporting triggering the delay-related information report or the delay-related information reporting when the second timer stops, does not run, or times out, and not supporting triggering the delay-related information report or the delay-related information reporting when the second timer runs; and the triggering the delay-related information report or the delay-related information reporting of the first granularity when data of the first granularity is obtained, and a second object is configured with a delay-related information report or delay-related information reporting specifically includes: triggering the delay-related information report or the delay-related information reporting of the third granularity when the data of the first granularity is obtained, the second object is configured with the delay-related information report or the delay-related information reporting, and the second timer stops, does not run, or times out.

In some embodiments, the second timer is waited to stop when the data of the first granularity is obtained, the second object is configured with the delay-related information report or the delay-related information reporting, and the second timer runs; and the delay-related information report or the delay-related information reporting of the third granularity is triggered after the second timer stops.

With reference to the method provided in the second aspect, in some embodiments, the method further includes: obtaining whether priority of the first granularity is higher than priority of another first granularity in the third granularity; and the triggering a delay-related information report or delay-related information reporting of a third granularity when data of a first granularity is obtained specifically includes: triggering the delay-related information report or the delay-related information reporting when the data of the first granularity is obtained, and the priority of the first granularity is higher than the priority of another first granularity in the third granularity.

In some embodiments, the delay-related information report or the delay-related information reporting is not triggered when the data of the first granularity is obtained and the priority of the first granularity is lower than or equal to the priority of at least one first granularity in the third granularity.

With reference to the method provided in the second aspect, in some embodiments, the method further includes: obtaining whether priority of the first granularity is higher than priority of another first granularity in the third granularity; and the triggering the delay-related information report or the delay-related information reporting of the first granularity when data of the first granularity is obtained, and a second object is configured with a delay-related information report or delay-related information reporting specifically includes: triggering the delay-related information report or the delay-related information reporting when the data of the first granularity is obtained, the second object is configured with the delay-related information report or the delay-related information reporting, and the priority of the first granularity is higher than the priority of another first granularity in the third granularity.

In some embodiments, the delay-related information report or the delay-related information reporting is not triggered when the data of the first granularity is obtained, the second object is configured with the delay-related information report or the delay-related information reporting, and the priority of the first granularity is lower than or equal to the priority of the at least one first granularity in the third granularity.

With reference to the method provided in the second aspect, in some embodiments, the method further includes: obtaining whether priority of the first granularity is higher than priority of another first granularity in the third granularity; and the triggering the delay-related information report or the delay-related information reporting of the third granularity when the data of the first granularity is obtained, and the second timer stops, does not run, or times out specifically includes: triggering the delay-related information report or the delay-related information reporting of the third granularity when the data of the first granularity is obtained, the second timer stops, does not run, or times out, and the priority of the first granularity is higher than the priority of another first granularity in the third granularity.

In some embodiments, the delay-related information report or the delay-related information reporting of the third granularity is not triggered when the data of the first granularity is obtained, the second timer stops, does not run, or times out, and the priority of the first granularity is lower than or equal to the priority of at least one first granularity in the third granularity.

In some embodiments, the second timer is stopped, and the delay-related information report and the delay-related information reporting of the third granularity is triggered when the data of the first granularity is obtained, the second timer runs, and the priority of the first granularity is higher than the priority of the another first granularity in the third granularity.

With reference to the method provided in the second aspect, in some embodiments, the method further includes: obtaining whether priority of the first granularity is higher than priority of another first granularity in the third granularity; and the triggering the delay-related information report or the delay-related information reporting of the third granularity when the data of the first granularity is obtained, the second object is configured with the delay-related information report or the delay-related information reporting, and the second timer stops, does not run, or times out specifically includes: triggering the delay-related information report or the delay-related information reporting of the third granularity when the data of the first granularity is obtained, the second object is configured with the delay-related information report or the delay-related information reporting, the second timer stops, does not run, or times out, and the priority of the first granularity is higher than the granularity of the another first granularity in the third granularity.

In some embodiments, the delay-related information report or the delay-related information reporting of the third granularity is not triggered when the data of the first granularity is obtained, the second object is configured with the delay-related information report or the delay-related information reporting, the second timer stops, does not run, or times out, and the priority of the first granularity is lower than or equal to the priority of the at least one first granularity in the third granularity.

In some embodiments, the second timer is stopped, the delay-related information report or the delay-related information reporting of the third granularity is triggered when the data of the first granularity is obtained, the second object is configured with the delay-related information report or the delay-related information reporting, the second timer runs, and the priority of the first granularity is higher than the priority of the another first granularity in the third granularity.

With reference to the method provided in the second aspect, in some embodiments, the method further includes: obtaining whether the first granularity corresponding to the third granularity has data; and the triggering the delay-related information report or the delay-related information reporting of the third granularity when data of a first granularity is obtained specifically includes: triggering the delay-related information report or the delay-related information reporting of the third granularity when the first granularity corresponding to the third granularity does not have data, and when the data of the first granularity is obtained.

In an implementation, that there is no data arriving at the third granularity previously includes that there is no data arriving at or available for all entities, paths, and links of the third granularity. In an implementation, that there is no data arriving at the third granularity previously includes that there is no data arriving at or available for one or more entities, paths, and links of the third granularity.

In some embodiments, the delay-related information report or the delay-related information reporting of the first granularity is not triggered when the first granularity corresponding to the third granularity has data and when the data of the first granularity is obtained.

With reference to the method provided in the second aspect, in some embodiments, the method further includes: obtaining whether the first granularity corresponding to the third granularity has data; and the triggering the delay-related information report or the delay-related information reporting of the first granularity when data of the first granularity is obtained, and a second object is configured with a delay-related information report or delay-related information reporting specifically includes: triggering the delay-related information report or the delay-related information reporting of the first granularity when the first granularity corresponding to the third granularity does not have data, the data of the first granularity is obtained, and the second object is configured with the delay-related information report or the delay-related information reporting.

With reference to the method provided in the second aspect, in some embodiments, the method further includes: obtaining whether the first granularity corresponding to the third granularity has data; and the triggering the delay-related information report or the delay-related information reporting of the third granularity when the data of the first granularity is obtained, and the second timer stops, does not run, or times out specifically includes: triggering the delay-related information report or the delay-related information reporting of the third granularity when the first granularity corresponding to the third granularity does not have data, the data of the first granularity is obtained, and the second timer stops, does not run, or times out.

With reference to the method provided in the second aspect, in some embodiments, the method further includes: obtaining whether the first granularity corresponding to the third granularity has data; and the triggering the delay-related information report or the delay-related information reporting of the third granularity when the data of the first granularity is obtained, the second object is configured with the delay-related information report or the delay-related information reporting, and the second timer stops, does not run, or times out specifically includes: triggering the delay-related information report or the delay-related information reporting of the third granularity when the first granularity corresponding to the third granularity does not have data, the data of the first granularity is obtained, the second object is configured with the delay-related information report or the delay-related information reporting, and the second timer stops, does not run, or times out.

According to a third aspect, this application provides a communication method. The method includes: indicating, when first indication information and/or second indication information is obtained, the first indication information and/or the second indication information, or triggering a delay-related information report or delay-related information reporting according to the first indication information and/or the second indication information, where the first indication information is used to indicate a first condition or that time-related information satisfies the first condition; and the second indication information is used to indicate to trigger the delay-related information report or the delay-related information reporting.

In an optional implementation, the first condition is at least one of the following: the time-related information is greater than or equal to a first threshold; an interval between second information and the time-related information is less than or equal to a second threshold; the time-related information reaches a time indicated by second time information, where the second time information is obtained based on a timestamp when the second granularity is obtained and/or a third threshold; the time-related information is greater than or equal to the second time information; an interval between the time-related information and the second time information is less than or equal to the second threshold; and the time-related information stops or times out.

In an implementation, the delay-related information is the same as the time-related information, that is, after triggering, the sending end directly sends the obtained time-related information to the receiving end, to indicate a remaining delay of the packet. In an implementation, the delay-related information is different from the time-related information. The delay-related information may be determined according to time. That is, after triggering, the sending end obtains the delay-related information through calculation or processing according to the obtained time-related information, and then sends the foregoing delay-related information to the receiving end.

The time-related information includes at least one piece of the following information: duration of a first timer, where the first timer is started when a second granularity is obtained; a sum of the duration of the first timer and first duration; caching duration of a packet of the first granularity; state information of the first timer; a first timestamp, where the first timestamp is a timestamp when the second granularity is obtained; a difference between current time information and the first timestamp; a sum of the first timestamp and first information; and the current time information.

The first granularity is an RLC entity or an LCH, or an RLC entity group or an LCH group, or a data burst, or a PDU set, or a DRB, or a QoS flow, or a PDU, or an SDU. The second granularity includes the first granularity.

With reference to the method provided in the third aspect, in some embodiments, before indicating the first indication information and/or the second indication information, or triggering a delay-related information report or delay-related information reporting according to the first indication information and/or the second indication information, the method further includes: determining that a third object is configured with the delay-related information report or the delay-related information reporting.

In an implementation, the third object is at least one of an entity, a protocol layer, a path, a link, a channel, a bearer, and a set.

In an implementation, the indicating the first indication information and/or the second indication information includes transmitting the first indication information and/or the second indication information from a protocol layer or entity of a sending end to another protocol layer or entity of the sending end. In an implementation, the indicating the first indication information and/or the second indication information includes notifying the another protocol layer or entity of the sending end of the first indication information and/or the second indication information. In an implementation, the indicating the first indication information and/or the second indication information includes transmitting the first indication information and/or the second indication information in the sending end to a receiving end, or notifying the receiving end of the first indication information and/or the second indication information.

With reference to the method provided in the third aspect, in some embodiments, the method further includes: determining whether a second timer runs, supporting triggering the delay-related information report or the delay-related information reporting when the second timer stops, does not run, or times out, and not supporting triggering the delay-related information report or the delay-related information reporting when the second timer runs; the triggering a delay-related information report or delay-related information reporting according to the first indication information and/or the second indication information specifically includes: triggering the delay-related information report or the delay-related information reporting according to the first indication information and/or the second indication information when the second timer stops, does not run, or times out; and the indicating the first indication information and/or the second indication information specifically includes: indicating the first indication information and/or the second indication information when the second timer stops, does not run, or times out.

In some embodiments, the foregoing method further includes: stopping the second timer according to the first indication information and/or the second indication information and triggering the delay-related information report or the delay-related information reporting when the second timer runs.

With reference to the method provided in the third aspect, in some embodiments, the method further includes: determining whether a second timer runs, supporting triggering the delay-related information report or the delay-related information reporting when the second timer stops, does not run, or times out, and not supporting triggering the delay-related information report or the delay-related information reporting when the second timer runs; the triggering a delay-related information report or delay-related information reporting according to the first indication information and/or the second indication information specifically includes: triggering the delay-related information report or the delay-related information reporting according to the first indication information and/or the second indication information when the second timer stops, does not run, or times out, and the third object is configured with the delay-related information report or the delay-related information reporting; and the indicating the first indication information and/or the second indication information specifically includes: indicating the first indication information and/or the second indication information when the second timer stops, does not run, or times out and the third object is configured with the delay-related information report or the delay-related information reporting.

In some embodiments, the foregoing method further includes: stopping the second timer and triggering the delay-related information report or the delay-related information reporting according to the first indication information and/or the second indication information when the second timer runs and the third object is configured with the delay-related information report or the delay-related information reporting.

With reference to the method provided in the third aspect, in some embodiments, the method further includes: obtaining whether a granularity corresponding to the first indication information and/or the second indication information has reported the time-related information; and the triggering a delay-related information report or delay-related information reporting according to the first indication information and/or the second indication information specifically includes: triggering the delay-related information report or the delay-related information reporting according to the first indication information and/or the second indication information when the granularity corresponding to the first indication information and/or the second indication information has not reported the time-related information.

With reference to the method provided in the third aspect, in some embodiments, the method further includes: obtaining whether a granularity corresponding to the first indication information and/or the second indication information has reported the time-related information; and the triggering a delay-related information report or delay-related information reporting according to the first indication information and/or the second indication information specifically includes: triggering the delay-related information report or the delay-related information reporting according to the first indication information and/or the second indication information when the third object is configured with the delay-related information report or the delay-related information reporting, and the granularity corresponding to the first indication information and/or the second indication information has not reported the time-related information.

According to a fourth aspect, this application further provides a communication method, applied to an electronic device. The method includes: receiving configuration information, where the configuration information includes at least one of the following: first granularity information, third indication information, first duration, first threshold, second threshold, third threshold, second information, timer information, granularity priority information, and indication information of starting to report a delay.

In an implementation, receiving means receiving from a receiving end.

The first granularity information is used to indicate a first granularity. The third indication information is used to indicate whether a delay-related information report or delay-related information reporting is configured. In an implementation, the third indication information is specifically used to indicate whether the first granularity is configured with the delay-related information report or the delay-related information reporting. The timer information is used to indicate to configure a first timer and/or a second timer. The granularity priority information is used to indicate priority of one or more sub-granularities in a granularity. The indication information of starting to report a delay is used to indicate to start a method for triggering the delay-related information report or the delay-related information reporting.

According to a fifth aspect, this application provides a communication method, applied to a receiving end. The method includes: sending configuration information, where the configuration information includes at least one of the following: first granularity information, third indication information, first duration, first threshold, second threshold, third threshold, second information, timer information, granularity priority information, and indication information of starting to report a delay.

In an implementation party, sending means sending to a sending end.

The first granularity information is used to indicate a first granularity. The third indication information is used to indicate whether a delay-related information report or delay-related information reporting is configured. In an implementation, the third indication information is specifically used to indicate whether the first granularity is configured with the delay-related information report or the delay-related information reporting. The timer information is used to indicate to configure a first timer and/or a second timer. The granularity priority information is used to indicate priority of one or more sub-granularities in a granularity. The indication information of starting to report a delay is used to indicate to start a method for triggering the delay-related information report or the delay-related information reporting.

### BRIEF DESCRIPTION OF DRAWINGS

FIG. 1 is a schematic diagram of a communication system according to an embodiment of this application;
FIG. 2 is a flowchart of determining, according to delay information, whether to trigger a delay-related information report or delay-related information reporting according to an embodiment of this application;
FIG. 3A to FIG. 3D are schematic diagrams of a specific embodiment of determining, according to time-related information, whether to trigger a delay-related information report or delay-related information reporting according to an embodiment of this application;
FIG. 4 is a flowchart of determining, according to delay information and whether a delay-related information report or delay-related information reporting is configured, whether to trigger the delay-related information report or the delay-related information reporting according to an embodiment of this application;
FIG. 5A and FIG. 5B are flowcharts of triggering a delay-related information report or delay-related information reporting by a PDCP according to an embodiment of this application;
FIG. 6A and FIG. 6B are flowcharts of triggering a delay-related information report or delay-related information reporting by an RLC according to an embodiment of this application;
FIG. 7 is a flowchart of determining, according to a data arrival, whether to trigger a delay-related information report or delay-related information reporting according to an embodiment of this application;
FIG. 8 is a schematic diagram of another specific embodiment of determining, according to a data arrival, whether to trigger a delay-related information report or delay-related information reporting according to an embodiment of this application;
FIG. 9 is a flowchart of determining, according to a data arrival and a second timer, whether to trigger a delay-related information report or delay-related information reporting according to an embodiment of this application;
FIG. 10 is a flowchart of determining, according to a data arrival and granularity priority, whether to trigger a delay-related information report or delay-related information reporting according to an embodiment of this application;
FIG. 11A is a flowchart of indicating first indication information and/or second indication information according to an embodiment of this application;
FIG. 11B is a flowchart of triggering a delay-related information report or delay-related information reporting according to first indication information and/or second indication information according to an embodiment of this application;
FIG. 12 is a flowchart of a specific embodiment of triggering a delay-related information report or delay-related information reporting according to first indication information and/or second indication information according to an embodiment of this application;
FIG. 13 is a method for transmitting configuration information according to an embodiment of this application; and
FIG. 14 is an example of a structure of a network device according to an embodiment of this application.

### DESCRIPTION OF EMBODIMENTS

Terms used in the following embodiments of this application are only intended to describe particular embodiments, and are not intended to limit this application.

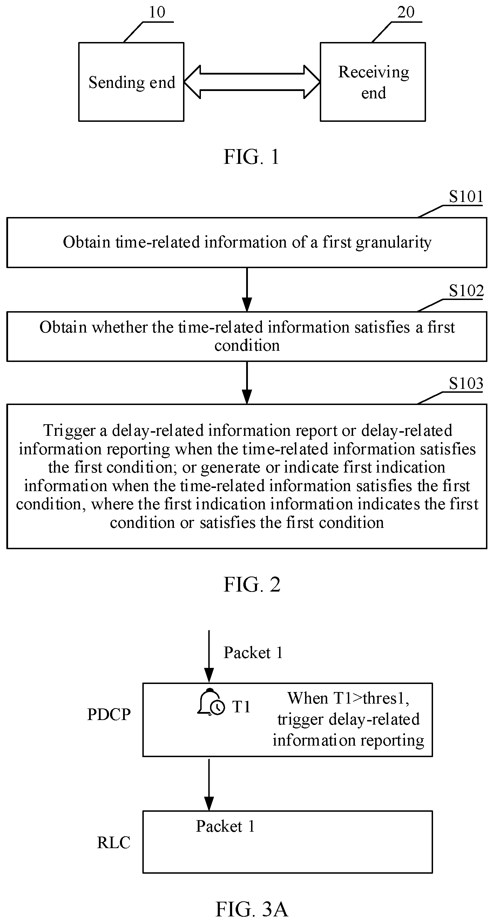

FIG. 1 is a schematic diagram of a communication system according to an embodiment of this application.

As shown in FIG. 1, the communication system includes a sending end 10 and a receiving end 20.

For example, the sending end 10 may be a cellular phone, a personal digital assistant (PDA), a handheld device with a wireless communication function, a computing device, another processing device connected to a wireless modem, an in-vehicle device, a wearable device, a terminal in a 5G or subsequent evolved version network, a terminal device in a future evolved public land mobile network (PLMN), or the like. This is not limited in embodiments of this application.

The receiving end 20 may be a transmission reception point (TRP), a base station, a relay node, a node, an access point, or the like. For example, receiving end 20 may be an access network device in a 5G communication system or an access network device in a future evolved network. The receiving end 20 may be a base transceiver station (BTS) in a global system for mobile communication (GSM) or a code division multiple access (CDMA) network, or may be a NodeB (NB) in wideband code division multiple access (WCDMA), or may be an evolutional NodeB (eNB) in long term evolution (LTE), or may be a gNodeB (gNB) in new radio (NR), or may be a base station (for example, a 6G base station) in a subsequent evolved version, or the like. This is not limited in embodiments of this application.

It may be understood that the sending end 10 and the receiving end 20 are peer entities. Therefore, the sending end 10 may alternatively be a device such as the TRP, the base station, the relay station, the node, or the access point that are listed above. Correspondingly, the receiving end 20 may be the cellular phone, the PDA, the wearable device, or the like that are listed above. This is not limited in embodiments of this application.

An object and a granularity described in this application may include at least one of an entity, a protocol layer, a path, a link, a channel, a bearer, and a set.

**Method 1. Determine whether to trigger a delay-related information report or delay-related information reporting according to time-related information.**

FIG. 2 is a flowchart of determining whether to trigger a delay-related information report or delay-related information reporting according to delay information according to an embodiment of this application.

In the method, in an implementation, a first protocol layer may obtain time-related information of a first granularity. The first protocol layer may trigger the delay-related information report or the delay-related information reporting when the time-related information satisfies a preset condition (a first condition described below), and may indicate second indication information to a second protocol layer after the first protocol layer triggers the delay-related information report or the delay-related information reporting. The second indication information is used to indicate to trigger or report the delay-related information report. The second protocol layer may trigger some preset actions according to the second indication information. In another implementation, the first protocol layer may obtain time-related information of the first granularity. The first protocol layer may generate and indicate first indication information to a second protocol layer when the time-related information satisfies a preset condition (a first condition described below). The first indication information indicates the first condition or satisfies the first condition. The second protocol layer may trigger some preset actions according to the indication information after obtaining the indication information.

S101: Obtain time-related information of a first granularity.

The first granularity is used to indicate a range of a packet covered by one piece of time-related information, or the first granularity is used to indicate a granularity of obtaining the delay information. The first granularity may be any one of the following: an RLC entity, a logical channel (LCH), an RLC entity group, an LCH group, a data burst frame, a protocol data unit (PDU), a PDU set, a data radio bearer (DRB), a quality of service (QoS) flow, or a service data unit (SDU).

Each packet has a packet delay requirement in a transmission process, that is, the packet needs to be successfully transmitted to a peer device (the receiving end 20) within a determined delay requirement range. If the packet cannot be successfully transmitted within an agreed time, the packet will be discarded. Discarding the packet will reduce capacity of data services and affect service quality. In a scenario in which an agreed delay requirement is known, the sending end 10 may monitor a current delay of the packet before the packet is sent to the receiving end 20, and further determine a remaining delay within a delay requirement range through the current delay. The time-related information is used to reflect the current delay of the packet.

The time-related information includes at least one piece of the following information: duration of a first timer, where the first timer is started when a second granularity is obtained; a sum of the duration of the first timer and first duration; caching duration of a packet of the first granularity; state information of the first timer; a first timestamp, where the first timestamp is a timestamp when the second granularity is obtained; a difference between current time information and the first timestamp; a sum of the first timestamp and first information; and the current time information.

In an implementation, the duration of the first timer is duration from starting to stopping or ending of the first timer, or the duration of the first timer is duration configured by the first timer, or the duration of the first timer is duration of running or starting of the first timer. In an implementation, the first protocol layer of the sending end 10 may start the first timer when obtaining the second granularity. The first timer may run continuously, and the first protocol layer of the sending end 10 may obtain timing duration of the first timer. The first timer may alternatively stop/time out after preset timing duration ends. The sending end 10 may obtain duration of whether the first timer stops/times out.

For example, the first protocol layer of the sending end 10 may be a service data adaptation protocol (SDAP) layer, a packet data convergence protocol (PDCP) layer, a radio link control (RLC) layer, or a media access control (MAC) layer. This is not limited in embodiments of this application.

In an implementation, the first duration is a configured or received threshold or fixed value. Configuring refers to that the receiving end 20 receives the first duration, and receiving refers to that an entity (a protocol layer) of the sending end 10 receives the first duration sent by another entity (a protocol layer), or receives the first duration sent by the receiving end 20. In an implementation, the first protocol layer may send the second granularity to the second protocol layer after receiving the second granularity. The second protocol layer may start another first timer when obtaining the second granularity. Meanwhile, the second protocol layer may further obtain timing duration of the first protocol layer. The timing duration is the first duration. A sum of the timing duration of the first timer in the second protocol layer and the first duration may represent a waiting delay of the second granularity in the sending end.

The second protocol layer may be lower than the first protocol layer. For example, the second protocol layer may be a PDPC layer, an RLC layer, or the like when the first protocol layer may be an SDAP layer; and the second protocol layer is may be an RLC layer, a MAC layer, and the like when the first protocol layer is a PDCP layer, which are not listed one by one herein. In some embodiments, the second protocol layer may alternatively be another protocol layer, and the first protocol layer and the second protocol layer may implement cross-layer transmission through a transmission path between the protocol layers.

In an implementation, state information of the first timer includes running, stopping/timeout. The first protocol layer may alternatively obtain a state of the first timer. The first timer may alternatively stop/time out after preset timing duration ends. Before stopping/timeout, the first protocol layer may obtain that the first timing is running. After stopping/timeout, the first protocol layer may obtain that the first timer stops/times out.

In an implementation, caching duration of the packet of the first granularity is duration that the packet is cached in the protocol layer, that is, the caching duration. The foregoing protocol layer may be one protocol layer or a plurality of protocol layers.

When there is one protocol layer, in an implementation, the caching duration of the packet is a time difference between when the protocol layer receives the packet and when the packet is transmitted to a next protocol layer. In an implementation, the caching duration of the packet is a time difference between when the protocol layer receives the packet and when delay information reporting is triggered. In an implementation, the caching duration of the packet is a time difference between when the protocol layer receives the packet and when the delay-related information is calculated.

When there is a plurality of protocol layers, the caching duration of the packet is a sum of duration of staying in the plurality of protocol layers. Duration of staying in the protocol layer may be a time from when the protocol layer receives the packet to when the packet is transmitted to a next protocol layer. In an implementation, the sum of the duration of staying in the plurality of protocol layers further includes a combination of the following three types of time differences: the time difference between when the protocol layer receives the packet and when the packet is transmitted to the next protocol layer, the time difference between when the protocol layer receives the packet and when the delay information reporting is triggered, and the time difference between when the protocol layer receives the packet and when first delay information is calculated.

In an implementation, the time-related information further includes maintenance duration. The maintenance duration is duration that a protocol layer that receives the packet maintains the packet or duration of a timer corresponding to the packet. The maintenance duration may alternatively be understood as duration between when the packet arrives at the protocol layer and when the protocol layer receives the first indication information, or duration between when the packet arrives at the protocol layer and when delay-related information reporting is triggered.

In an implementation, the first timestamp is timestamp information. The first timestamp is a timestamp when the second granularity is obtained. In an implementation, after receiving the second granularity, the first protocol layer may obtain a timestamp when the second granularity is received, that is, the first timestamp. In an implementation, after receiving the second granularity, the second protocol layer may obtain, from the first protocol layer, the first timestamp that is recorded by the first protocol layer and when the second granularity is received.

In an implementation, the current time information is timestamp information. The first protocol layer may further obtain, in real time, current time information indicating a current time, for example, a current timestamp. The first timestamp may be used to indicate a time when the first protocol layer receives the second granularity. Therefore, with reference to the current time information and the first timestamp, for example, obtaining a difference between the current time information and the first timestamp, the first protocol layer can obtain a waiting delay of the second granularity in the protocol layer so far. The foregoing protocol layer may be one protocol layer, or may be a plurality of protocol layers.

In an implementation, the current timestamp is a sum of the first timestamp and the first information. The first information is a configured or received threshold or fixed value. Configuring refers to that the receiving end 20 configures the first information, and receiving refers to that an entity (a protocol layer) of the sending end 10 receives the first information sent by another entity (a protocol layer), or receives the first information sent by the receiving end 20.

In an implementation, the first granularity is the same as the second granularity. For example, the first granularity is an SDU, and the second granularity is an SDU. One SDU corresponds to a set of time-related information.

In an implementation, the first granularity is different from the second granularity. Optionally, the first granularity includes the second granularity. For example, the first granularity is a PDU set. The PDU set includes at least one PDU. The second granularity is a PDU. One PDU set corresponds to one piece of time-related information. Time-related information of any PDU in one PDU set is the time-related information corresponding to the PDU set. In an implementation, the first protocol layer may start to obtain the time-related information of the PDU set after a PDU in a PDU set is obtained.

In an implementation, the delay-related information is the same as the time-related information, that is, after triggering, the sending end directly sends the obtained time-related information to the receiving end, to indicate a remaining delay of the packet. In an implementation, the delay-related information is different from the time-related information. The delay-related information may be determined according to time. That is, after triggering, the sending end obtains the delay-related information through calculation or processing according to the obtained time-related information, and then sends the foregoing delay-related information to the receiving end.

In an implementation, obtaining refers to that a protocol layer in the sending end 10 obtains the time-related information from another protocol layer or entity. In an implementation, obtaining refers to that a protocol layer in the sending end 10 obtains the time-related information through an apparatus for detecting the time-related information set by the protocol layer in the sending end. For example, the first protocol layer may obtain timing duration of a first timer that is started by the first protocol layer. Or, the first protocol layer may obtain the timing duration of the first timer of an upper protocol layer of the first protocol layer from the upper protocol layer of the first protocol layer. In some implementations, the first protocol layer may further obtain a sum of the timing duration of the timer of the upper protocol layer and timing duration of a timer of this protocol layer.

S102: Obtain whether time-related information satisfies a first condition.

In an implementation, the first condition is a condition that is set based on the time-related information of the first granularity and that indicates whether a delay of the first granularity approaches a threshold.

The first condition is at least one of the following: the time-related information is greater than or equal to a first threshold; an interval between second information and the time-related information is less than or equal to a second threshold; the time-related information reaches a time indicated by second time information, where the second time information is obtained based on a timestamp when the second granularity is obtained and/or a third threshold; the time-related information is greater than or equal to the second time information; an interval between the time-related information and the second time information is less than or equal to the second threshold; and the time-related information stops or times out.

In an implementation, the first threshold, the second information, the second threshold, and the third threshold are configured by a receiving end 20. In an implementation, the first threshold, the second threshold, and the third threshold are set by a sending end 10 according to a delay requirement of the packet, or received by an entity (a protocol layer) of the sending end 10 and sent by another entity (a protocol layer). One or more of the first threshold, the second information, the second threshold, and the third threshold are configured by the receiving end 20, and the other one or more of the first threshold, the second information, the second threshold, and the third threshold are set by the sending end 10 according to the delay requirement of the packet, and/or, received by an entity (a protocol layer) of the sending end 10 and sent by another entity (a protocol layer). The first threshold and the third threshold may be the same or may be different.

In an implementation, the second information is used to indicate a maximum value of a packet transmission delay of the first granularity or timestamp information. In this case, the interval between the second information and the time-related information may be used to reflect a remaining delay of the packet.

In an implementation, the threshold is a threshold value. In an implementation, the first threshold and the third threshold are less than the delay requirement of the packet, so that after the method in this application is triggered, the sending end 10 still has ample time to send the foregoing packet to the receiving end 20 without timeout. For example, the delay requirement of the packet is 10 ms, that is, the packet needs to be successfully sent to the receiving end 20 within 10 ms. In this case, the first threshold may be set to a value less than 10 ms, such as 5 ms and 7 ms. In this way, after triggering, the sending end 10 still has 5 ms or 3 ms to complete sending data to the receiving end 20. Similarly, the second threshold may be set to a value greater than 0, such as 2 ms and 4 ms. When the maximum value of the packet transmission delay indicated by the second information and a waiting delay of the packet indicated by the time-related information are less than the foregoing 2 ms or 4 ms, that is, when the remaining delay is less than the foregoing 2 ms or 4 ms, the sending end 10 may trigger a delay-related information report or delay-related information reporting. Similarly, after triggering, the sending end 10 still has 2 ms or 4 ms to complete sending data to the receiving end 20.

In an implementation, the second time information is obtained through a difference between a timestamp when the first granularity is received and/or a third threshold.

Specifically, there are the following implementations in which the time-related information satisfies the first condition:
1. The time-related information is timing duration of a first timer.

In an implementation, the first protocol layer starts the first timer after receiving the second granularity, and the time-related information is duration of the first timer. The duration of the first timer is greater than or equal to the first threshold, that is, the time-related information satisfies the first condition. When the duration of the first timer is greater than or equal to the first threshold, for example, when the timing duration x1 of the first timer is greater than or equal to 5 ms, the first protocol layer may trigger a delay-related information report or delay-related information reporting, or generate or indicate first indication information.

In an implementation, a difference between the duration of the foregoing first timer and the second information is less than or equal to the second threshold, that is, the time-related information satisfies the first condition. When the difference between the duration of the first timer and the second information is less than or equal to the second threshold, for example, when the difference x2 between the duration of the first timer and the second information (10 ms) is less than or equal to 4 ms, the first protocol layer may trigger delay-related information report or delay-related information reporting, or generate or indicate first indication information.

2. The time-related information is a sum of the duration of the first timer and the first duration.

In an implementation, the first protocol layer starts the first timer after receiving the second granularity. The first protocol layer may further receive timer duration of an upper protocol layer of the first protocol layer, or preset duration configured by another protocol layer or the receiving end 20, that is, the first duration. The first protocol layer may obtain a sum of timing duration of the first timer and the first duration. The foregoing sum is greater than or equal to the first threshold, that is, the time-related information satisfies the first condition. When the foregoing sum is greater than or equal to the first threshold, for example, when the sum x3 of the timing duration of the first timer and the first duration is greater than or equal to 5 ms, the first protocol layer may trigger a delay-related information report or delay-related information reporting, or generate or indicate first indication information.

In an implementation, the first protocol layer may further obtain a difference between the sum of the timing duration of the first timer and the first duration and the second information. The foregoing difference is less than or equal to the second threshold, that is, the time-related information satisfies the first condition. For example, when the difference between the sum of the timing duration of the first timer and the first duration and the second information is less than or less than or equal to the second threshold, the first protocol layer may trigger the delay-related information report or the delay-related information reporting, or generate or indicate the first indication information.

3. The time-related information is state information of the first timer.

In an implementation, the first protocol layer starts the first timer after receiving the second granularity. The first timer changes from a running state to a stop/timeout state after the preset timing duration ends. A state of the first timer is a stopped/timeout state, that is, the time-related information satisfies the first condition. When the first timer stops/times out, the first protocol layer may trigger the delay-related information report or the delay-related information reporting, or generate or indicate the first indication information.

4. The time-related information is a first timestamp and current time information.

When receiving the second granularity, the first protocol layer may record the first timestamp when the second granularity is received. The first protocol layer may receive the third threshold. In an implementation, the first protocol layer may obtain a sum of the first timestamp and the third threshold, that is, the second time information. The current time information reaches the second time information, that is, the time-related information satisfies the first condition. In other words, the current time information is greater than or equal to the second time information, that is, the time-related information satisfies the first condition.

In an implementation, after obtaining the second time information, the first protocol layer may obtain a difference between the current time information and the second time information. The foregoing difference is less than or equal to the second threshold, that is, the time-related information satisfies the first condition.

5. The time-related information is a difference between the first timestamp and the current time information.

In an implementation, after the first protocol layer obtains the first timestamp when the second granularity is received, the first protocol layer may obtain the difference between the first timestamp and the current time information. The foregoing difference may indicate a waiting delay of the second granularity in the sending end 10. The foregoing difference is the time-related information. The foregoing difference is greater than or equal to the first threshold, that is, the time-related information satisfies the first condition.

6. The time-related information is a sum of the first timestamp and first information.

In an implementation, the first protocol layer obtains the first timestamp when the second granularity is received, and may determine the second time information with reference to configured or received first information. For example, the sum of the first timestamp and the first information may be the second time information. A current time reaches or exceeds a time corresponding to the second time information, that is, the time-related information satisfies the first condition.

In an embodiment, after the first protocol layer obtains the first timestamp when the second granularity is received, the first protocol layer may obtain the difference between the first timestamp and the current time. The difference between the first timestamp and the current time is less than the first information, that is, the time-related information satisfies the first condition.

7. The time-related information is the current time information.

In an implementation, the first protocol layer may obtain the second time information of the first granularity. The current time information reaches or is greater than or equal to the second time information, that is, the time-related information satisfies the first condition.

8. Caching duration of a packet of the first granularity. The time-related information is the caching duration of the packet of the first granularity. The delay-related information report or the delay-related information reporting is triggered when the foregoing caching duration is greater than or equal to the first threshold, or the difference between the second information and the foregoing caching duration is less than or equal to the second threshold.

9. Maintenance duration of the packet of the first granularity. The time-related information is the maintenance duration of the packet of the first granularity. The delay-related information report or the delay-related information reporting is triggered when the foregoing maintenance duration is greater than or equal to the first threshold, or the difference between the second information and the foregoing maintenance duration is less than or equal to the second threshold.

S103: Trigger a delay-related information report or delay-related information reporting when the time-related information satisfies a first condition; or generate or indicate first indication information when the time-related information satisfies the first condition. The first indication information indicates the first condition or satisfies the first condition.

In an implementation, after obtaining that the time-related information satisfies the first condition, the first protocol layer may trigger the delay-related information report or the delay-related information reporting. In an implementation, after triggering the delay-related information report or the delay-related information reporting, the first protocol layer may indicate second indication information to the second protocol layer. The second indication information indicates to trigger the delay-related information report or the delay-related information reporting. Further, the second protocol layer may further continue to indicate the foregoing second indication information to a lower protocol layer of the second protocol layer. The foregoing second protocol layer or the lower protocol layer of the second protocol layer may report the delay-related information to the receiving end 20 according to the foregoing second indication information.

In an implementation, the first protocol layer may generate the first indication information after obtaining that the time-related information satisfies the first condition. The first indication information indicates the first condition or satisfies the first condition. In an implementation, after generating the first indication information, the first protocol layer may indicate the foregoing first indication information to the second protocol layer. The second protocol layer may obtain, according to the foregoing first indication information, that the time-related information satisfies the first condition, or the second protocol layer may obtain, according to the foregoing first indication information, that it is detected by a first protocol side that the time-related information satisfies the first condition. Therefore, the second protocol layer may trigger the delay-related information report or the delay-related information reporting, or trigger to indicate the foregoing first indication information according to that the time-related information satisfies the first condition or it is detected by the first protocol side that the time-related information satisfies the first condition.

The second protocol layer may indicate the second indication information to a third protocol layer below the second protocol layer when the second protocol layer triggers the delay-related information report or the delay-related information reporting. The second indication information indicates to trigger the delay-related information report or the delay-related information reporting. After obtaining the foregoing second indication information, the third protocol layer may indicate the foregoing second indication information or trigger the delay-related information report or the delay-related information reporting according to the foregoing second indication information.

After the second protocol layer triggers to indicate the foregoing first indication information, the second protocol layer indicates the foregoing first indication information to the third protocol layer below the second protocol layer. After obtaining the foregoing first indication information, the third protocol layer may indicate the foregoing first indication information or trigger the delay-related information report or the delay-related information reporting according to the foregoing first indication information.

FIG. 3A is a schematic diagram of a specific embodiment of determining whether to trigger a delay-related information report or delay-related information reporting according to time-related information according to an embodiment of this application.

As shown in FIG. 3A, an apparatus for detecting time-related information may be set in a PDCP layer of a sending end 10. A PDCP may start a timer T1 (a first timer) when a packet 1 of a first granularity is received. Therefore, timing duration of the timer T1 may represent a waiting delay of the packet 1 in the sending end 10 before being successfully transmitted.

When duration of the timer T1 is greater than or equal to a threshold thres1 (a first threshold), the PDCP may determine that the time-related information satisfies the first condition. In this case, the PDCP may trigger the delay-related information report or the delay-related information reporting. For example, a delay requirement of the packet 1 is 10 ms, and thres1 may be set to 5 ms. When the timing duration of the timer T1 reaches 5 ms, the PDCP may trigger the delay-related information report or the delay-related information reporting.

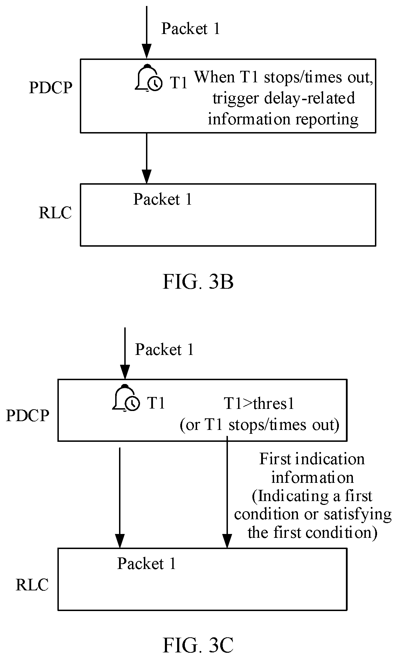

As shown in FIG. 3B, a PDCP may start a timer T1 (a first timer) when a packet 1 of a first granularity is received. T1 stops or times out after preset timing duration ends. A delay-related information report or delay-related information reporting is triggered when T1 stops or times out.

Referring to an introduction of the time-related information in S101, optionally, the PDCP may further determine a time interval between the second information and the time-related information, and trigger the delay-related information report or the delay-related information reporting when the time interval is less than or equal to a second threshold. For example, the second information may be set to 10 ms, and thres2 may be set as 4 ms. The time interval 4 ms between the second information and the time-related information is less than or equal to thres2 when timing of the timer T1 increases to 6 ms. In this case, the PDCP may trigger the delay-related information report or the delay-related information reporting.

Optionally, the PDCP may further record a timestamp (a first timestamp) when the packet 1 is received. With reference to a third threshold, the PDCP may determine a time t1 (second time information) when the delay-related information report or the delay-related information reporting is triggered, and the PDCP may trigger the delay-related information report or the delay-related information reporting when a current time reaches the time t1 indicated by the second time information.

Specifically, in some embodiments, that the PDCP triggers the delay-related information report or the delay-related information reporting refers to indicating the second indication information. The PDCP may indicate the second indication information to the receiving end 20 or another protocol layer in the sending end 10, for example, a radio link control (RLC) layer. The second indication information indicates to trigger the delay-related information report or the delay-related information reporting.

FIG. 3C is a schematic diagram of another specific embodiment of determining whether to trigger a delay-related information report or delay-related information reporting according to time-related information according to an embodiment of this application.

As shown in FIG. 3C, after it is determined that the time-related information satisfies a first condition, the PDCP may alternatively generate first indication information. The first indication information indicates the first condition or satisfies the first condition. The PDCP may send the foregoing first indication information to another protocol layer of a sending end 10, for example, an RLC layer, to indicate the another protocol layer or entity to trigger the delay-related information report or the delay-related information reporting.

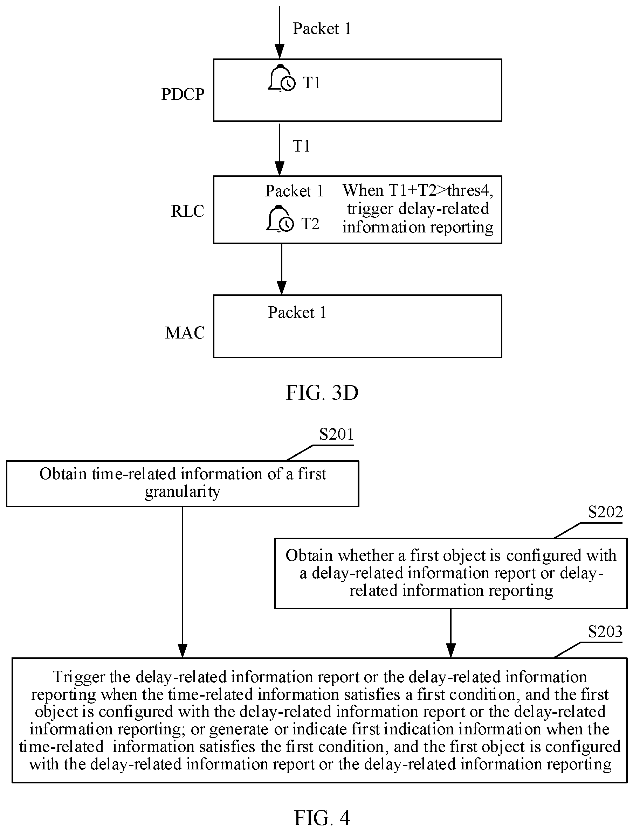

FIG. 3D is a schematic diagram of another specific embodiment of determining whether to trigger a delay-related information report or delay-related information reporting according to time-related information according to an embodiment of this application.

As shown in FIG. 3D, an apparatus for detecting time-related information may be set in an RLC of a sending end 10. The RLC may start a timer T2 (a first timer) when the RLC receives a packet 1. When duration of the timer T2 is greater than or equal to a threshold thres3 (a first threshold), the RLC may determine that the time-related information satisfies the first condition. In this case, the RLC may trigger the delay-related information report or the delay-related information reporting. For example, thres3 may be set to 2.5 ms. When timing duration of the timer T2 reaches 2.5 ms, the RLC may trigger the delay-related information report or the delay-related information reporting.

Optionally, the RLC may further receive the timing duration (first duration) of the timer T1 issued by the PDCP. In this case, the timer T1 stops timing after the PDCP sends the packet 1 to the RLC. The RLC may obtain a sum T1+T2 of the timing duration of the timer T1 and the timer T2. The RLC may determine to trigger the delay-related information report or the delay-related information reporting when T1+T2 is greater than or equal to a threshold thres4 (the first threshold). For example, thres4 may be set to 5 ms. The RLC may trigger the delay-related information report or the delay-related information reporting when duration of T1+T2 reaches 5 ms.

Referring to FIG. 3C, the RLC may alternatively generate first indication information after determining that the time-related information satisfies the first condition, to indicate the first condition or satisfy the first condition. Then, the RLC may send the foregoing first indication information to another protocol layer or entity of the sending end 10, for example, a MAC layer. In a method that the PDCP indicates the first indication information to the RLC, the RLC may indicate the foregoing first indication information to another protocol layer or entity of the sending end 10 after obtaining the foregoing first indication information.

**Method 2: Determine whether to trigger the delay-related information report or the delay-related information reporting according to the time-related information and whether the delay-related information report or the delay-related information reporting is configured.**

In some implementations, from perspectives of distinguishing services or saving resources, some protocol layer entities in the sending end 10 may be configured to trigger the delay-related information report or the delay-related information reporting, and some other protocol layer entities may not be configured to trigger the delay-related information report or the delay-related information reporting. The protocol layer entity configured to trigger the delay-related information report or the delay-related information reporting has a capability of triggering the delay-related information report or the delay-related information reporting. In this case, when determining whether to trigger the delay-related information report or the delay-related information reporting, the entity that triggers the delay-related information report or the delay-related information reporting of the sending end 10 further needs to obtain whether a corresponding protocol layer entity is configured with the delay-related information report or the delay-related information reporting.

In some implementations, a first protocol layer entity may obtain that the time-related information satisfies the first condition, and obtain whether a second protocol layer entity is configured with the delay-related information report or the delay-related information reporting. When the time-related information satisfies the first condition and the second protocol layer entity is configured with the delay-related information report or the delay-related information reporting, the first protocol layer triggers the delay-related information report or the delay-related information reporting, and issues the second indication information to the second protocol layer entity. Or, the first indication information is issued to the second protocol layer entity in a case that the second protocol layer entity is configured with the delay-related information report or the delay-related information reporting. In this way, the first protocol layer entity may stop a subsequent operation in a case that the second protocol layer entity is not configured with the delay-related information report or the delay-related information reporting, thereby saving resources such as signaling overheads.

FIG. 4 is a flowchart of determining whether to trigger a delay-related information report or delay-related information reporting according to delay information and whether the delay-related information report or the delay-related information reporting is configured according to an embodiment of this application.

S201: Obtain time-related information of a first granularity. Refer to an introduction in S101. Details are not described herein again.

S202: Obtain whether a first object is configured with a delay-related information report or delay-related information reporting. An execution sequence of S201 and S202 is not limited in this embodiment of this application.

In an implementation, the first object includes at least one of an entity, a protocol layer, a path, a link, a channel, a bearer, and a set. In an implementation, the first object may be a protocol layer that triggers the time-related information. In an implementation, the first object may alternatively be another protocol layer in a sending end 10 for transmitting a packet of the first granularity, first indication information and/or second indication information, and may alternatively be a protocol layer entity or path in the sending end 10 for reporting the time-related information. In an implementation, a first protocol layer entity may obtain whether the first protocol layer entity and/or a second protocol layer entity below the first protocol layer entity is configured with a delay-related information report or delay-related information reporting. For example, in the method shown in FIG. 3A, a PDCP may obtain whether the PDCP is configured with the delay-related information report or the delay-related information reporting. Optionally, the PDCP may further obtain whether an RLC is configured with the delay-related information report or the delay-related information reporting, or, the PDCP may further obtain whether a MAC is configured with the delay-related information report or the delay-related information reporting.

In an implementation, the first protocol layer entity may obtain whether lower protocol layer entities, such as a second protocol layer entity and a third protocol layer entity below the first protocol layer entity are all configured with the delay-related information report or the delay-related information reporting. For example, the PDCP may obtain whether the RLC and the MAC are both configured with the delay-related information report or the delay-related information reporting.

In some embodiments, the obtaining whether a first object is configured with a delay-related information report or delay-related information reporting specifically includes: determining, through configuration information, whether the first object is configured with the delay-related information report or the delay-related information reporting, and/or, determining, through configuration state information indicated by the first object, whether the first object is configured with the delay-related information report or the delay-related information reporting.

In an implementation, the configuration information is obtained from a receiving end 20.

The sending end receives the configuration information from the receiving end. The configuration information is used to indicate that the first object is configured with the delay-related information report or the delay-related information reporting, or the first object is not configured with the related information report or the delay-related information reporting.

For example, the first protocol layer entity may receive the configuration information from the receiving end 20. The configuration information records which protocol layer entities need to be configured with the delay-related information report or the delay-related information reporting. The foregoing protocol layer entity that is indicated to need to be configured with the delay-related information report or the delay-related information reporting may be configured with the delay-related information report or the delay-related information reporting. The first protocol layer may obtain the foregoing configuration information, and further obtain whether a protocol layer entity below the first protocol layer entity is configured with the delay-related information report or the delay-related information reporting.

In an implementation, a protocol layer entity cannot obtain the configuration information. That the protocol layer entity cannot obtain the configuration information may be that the protocol layer entity does not have a permission to obtain the configuration information. In this case, the protocol layer entity cannot determine, through the configuration information, whether one or more other protocol layer entities are configured with the delay-related information report or the delay-related information reporting. In this case, in an implementation, an object at the sending end obtains configuration state information indicated by the first object. The configuration state information is used to indicate that the first object is configured with the delay-related information report or the delay-related information reporting, or the first object is not configured with the delay-related information report or the delay-related information reporting.

For example, the first protocol layer entity may send a configuration state request to the second protocol layer entity, and query, through the foregoing request, whether the second protocol layer entity is configured with the delay-related information report or the delay-related information reporting. The second protocol layer entity may return the configuration state information to the first protocol layer entity in response to the foregoing request. The configuration state information may indicate that the second protocol layer entity is configured with the delay-related information report or the delay-related information reporting, or is not configured with the delay-related information report or the delay-related information reporting.

The first object needs to be specifically determined before obtaining whether the first object is configured with the delay-related information report or the delay-related information reporting. In an implementation, when a packet of a first granularity is submitted to the first object, the first protocol layer may obtain the configuration information or the configuration state information of the first object, and determine whether the first object is configured with the delay-related information report or the delay-related information reporting. In an implementation, when the packet of the first protocol layer is not submitted to the first object, the first protocol layer may obtain the first object to which the packet is to be submitted, then obtain the configuration information or the configuration state information of the first object, and determine whether the first object is configured with the delay-related information report or the delay-related information reporting.

For example, after obtaining the packet, the first protocol layer entity needs to submit the foregoing packet to the second protocol layer entity. Before submitting the packet to the second protocol layer entity, the first protocol layer entity may determine that the packet needs to be submitted to the second protocol layer entity, and then obtain whether the second protocol layer entity is configured with the delay-related information report or the delay-related information reporting. After the foregoing packet has been submitted to the second protocol layer entity, the first protocol layer entity may receive the second protocol layer entity of the packet, and further obtain whether the second protocol layer entity is configured with the delay-related information report or the delay-related information reporting.

In an implementation, the first timer is stopped after obtaining that the first object is not configured with the delay-related information report or the delay-related information reporting. In an implementation, after the first timer is stopped, time-related information does not satisfy the first condition, so that the delay-related information report or the delay-related information reporting is not triggered. For example, the first protocol layer entity may stop the first timer of this protocol layer when the first protocol layer entity obtains that the second protocol layer entity is not configured with the delay-related information report or the delay-related information reporting. In this case, the first timer does not time, or stops, or times out. Further, the time-related information of the first granularity does not satisfy the first condition, for example, the duration of the first timer does not reach a first threshold. In this case, the first protocol layer entity does not trigger the delay-related information report or the delay-related information reporting.

In an implementation, the first timer is continued to be maintained after obtaining that the first object is configured with the delay-related information report or the delay-related information reporting. In this case, the first protocol layer entity may trigger the delay-related information report or the delay-related information reporting when the time-related information obtained through the first timer satisfies the first condition, for example, when the duration of the first timer reaches the first threshold.

S203: Trigger the delay-related information report or the delay-related information reporting when the time-related information satisfies the first condition, and the first object is configured with the delay-related information report or the delay-related information reporting; or generate or indicate first indication information when the time-related information satisfies the first condition, and the first object is configured with the delay-related information report or the delay-related information reporting.

In an implementation, the delay-related information report or the delay-related information reporting is not triggered when the first object is not configured with the delay-related information report or the time-related information reporting, and when the first condition is satisfied.

For example, the first protocol layer entity may trigger the delay-related information report or the delay-related information reporting when the first protocol layer entity obtains that the time-related information satisfies the first condition, and the second protocol layer entity is configured with the delay-related information report or the time-related information reporting. In an implementation, the first protocol layer entity may trigger the delay-related information report or the delay-related information reporting when the first protocol layer entity obtains that the time-related information satisfies the first condition, and both the second protocol layer entity and the third protocol layer entity below the first protocol layer entity are configured with the delay-related information report or the time-related information reporting.

In an implementation, whether the first object is configured with the delay-related information report or the delay-related information reporting after the first condition is satisfied. For example, the first protocol layer entity triggers to obtain that whether the second protocol layer entity is configured with the delay-related information report or the delay-related information reporting after obtaining the time-related information satisfies the first condition. In an implementation, whether the first condition is satisfied is obtained after obtaining that the first object is configured with the delay-related information report or the delay-related information reporting. For example, the first protocol layer entity may trigger to obtain that the second protocol layer entity is configured with the delay-related information report or the delay-related information reporting after obtaining the time-related information of the first granularity. The first protocol layer entity may not monitor whether the time-related information satisfies the first condition when obtaining whether the second protocol layer entity is not configured with the delay-related information report or the delay-related information reporting, thereby saving resources.

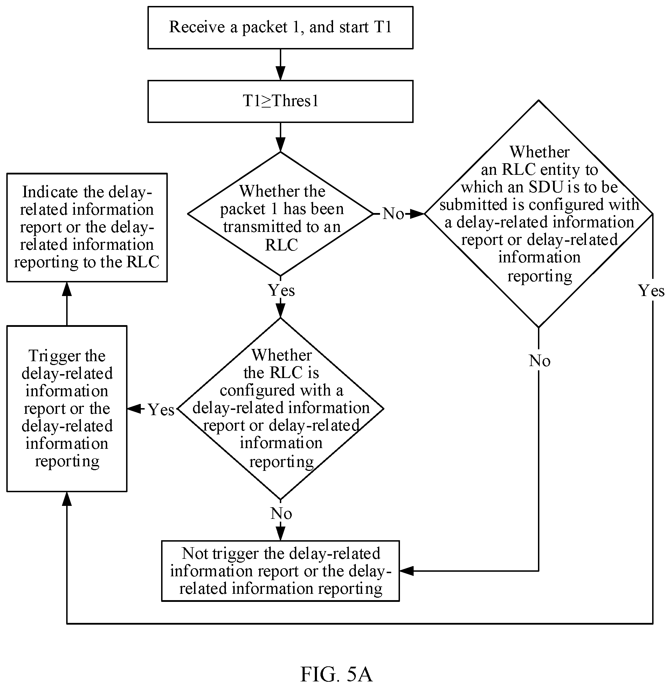

For example, FIG. 5A is a flowchart of triggering a delay-related information report or delay-related information reporting by a PDCP according to an embodiment of this application.

As shown in FIG. 5A, the PDCP starts a timer T1 after receiving a packet 1. The PDCP may obtain whether the packet 1 has been transmitted to an RLC after timing duration of the timer T1 is greater than or equal to thres1 (that is, a first condition is satisfied). The PDCP may obtain whether the RLC (the foregoing RLC that receives the first packet 1) is configured with the delay-related information report or the delay-related information reporting when the packet 1 has been transmitted to the RLC. The PDCP triggers the delay-related information report or the delay-related information reporting when the foregoing RLC is configured with the delay-related information report or the delay-related information reporting. Therefore, the PDCP may transmit a delay-related information report or delay-related information reporting indication to the RLC.

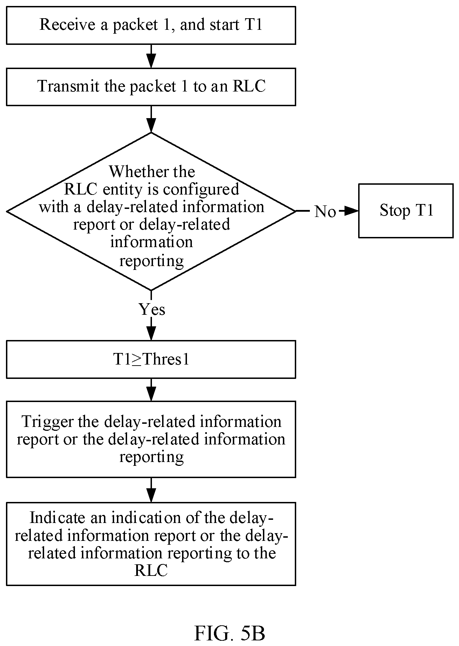

FIG. 5B is another flowchart of triggering a delay-related information report or delay-related information reporting by a PDCP according to an embodiment of this application.

As shown in FIG. 5B, the PDCP starts a timer T1 after receiving a packet 1. Meanwhile, the PDCP may transmit the packet 1 to a lower protocol layer entity RLC of the PDCP. In a process of transmitting the packet 1 to the RLC, the PDCP may obtain whether the RLC is configured with the delay-related information report or the delay-related information reporting. In a scenario where the RLC is configured with the delay-related information report or the delay-related information reporting, after the timing duration of the timer T1 is greater than or equal to thres1, the PDCP triggers the delay-related information report or the delay-related information reporting, and further, the PDCP may transmit a delay-related information report or delay-related information reporting indication to the RLC. In a scenario where the RLC is not configured with the delay-related information report or the delay-related information reporting, the PDCP may stop or turn off the timer T1, thereby saving resources.

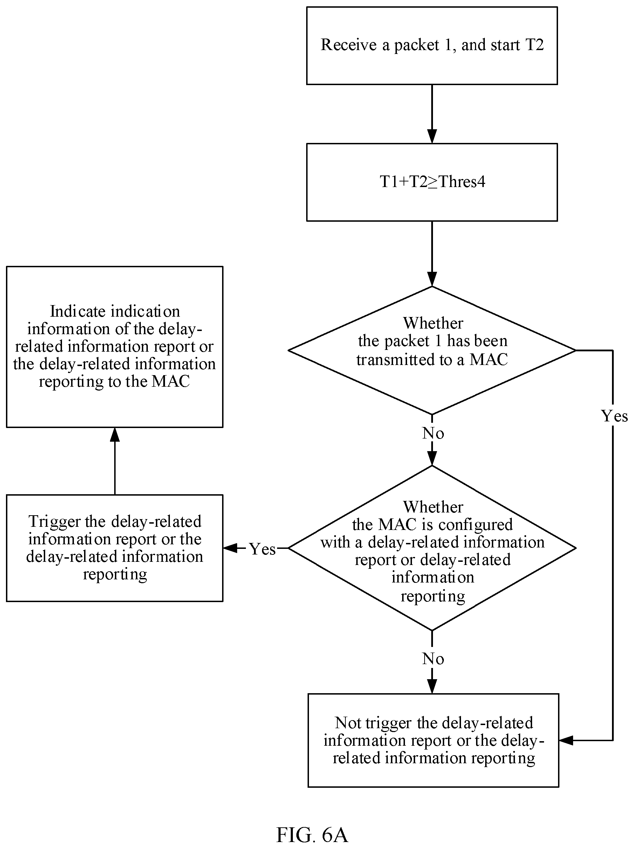

FIG. 6A is a flowchart of triggering a delay-related information report or delay-related information reporting by an RLC according to an embodiment of this application.

As shown in FIG. 6A, the RLC starts a timer T2 after receiving a packet 1. The RLC may obtain whether the packet 1 has been transmitted to a MAC after a sum of timing duration of the timer T2 and timing duration of a timer T1 at a PDCP layer is greater than or equal to thres4 (that is, a first condition is satisfied). The RLC does not trigger the delay-related information report or the delay-related information reporting when the packet 1 has been transmitted to the MAC and in a case that the first condition is satisfied. The RLC may obtain whether the MAC is configured with the delay-related information report or the delay-related information reporting when the packet 1 has not been transmitted to the MAC. The RLC triggers the delay-related information report or the delay-related information reporting, and the RLC may transmit a delay-related information report or delay-related information reporting indication to the MAC when the foregoing MAC is configured with the delay-related information report or the delay-related information reporting. The RLC does not trigger the delay-related information report or the delay-related information reporting when the foregoing MAC is not configured with the delay-related information report or the delay-related information reporting.

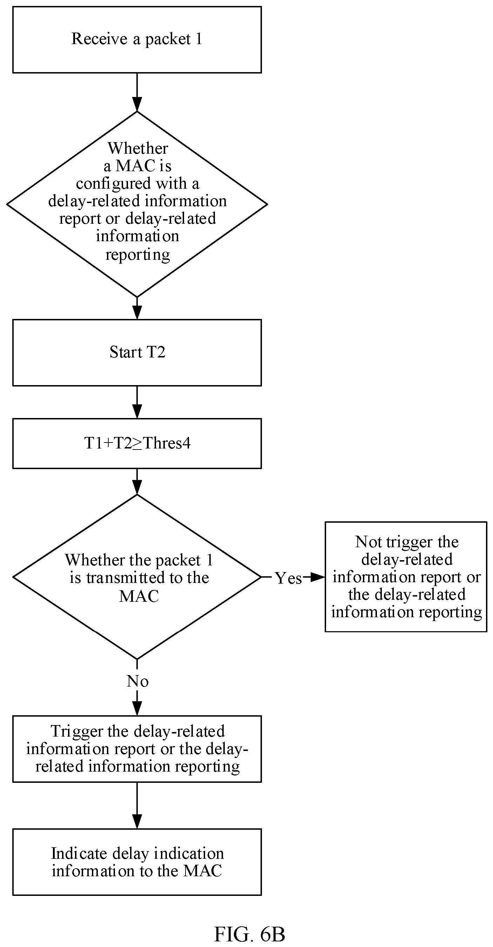

FIG. 6B is another flowchart of triggering a delay-related information report or delay-related information reporting by an RLC according to an embodiment of this application.

As shown in FIG. 6B, the RLC may obtain whether a MAC is configured with the delay-related information report or the delay-related information reporting after receiving a packet 1. In a scenario where the MAC is configured with the delay-related information report or the delay-related information reporting, the RLC may start a timer T2. The RLC may obtain whether the packet 1 is transmitted to the MAC after a first condition is satisfied (for example, T1+T2≥Thres4). The RLC does not trigger the delay-related information report or the delay-related information reporting when the packet 1 has been transmitted to the MAC. When the packet 1 has not been transmitted to the MAC, the RLC triggers the delay-related information report or the delay-related information reporting, and the RLC may transmit a delay-related information report or delay-related information reporting indication to the MAC.

**Method 3. Determine, according to a data arrival, whether to trigger a delay-related information report or delay-related information reporting.**

In some implementations, a first protocol layer may trigger the delay-related information report or the delay-related information reporting after data arrival is detected.

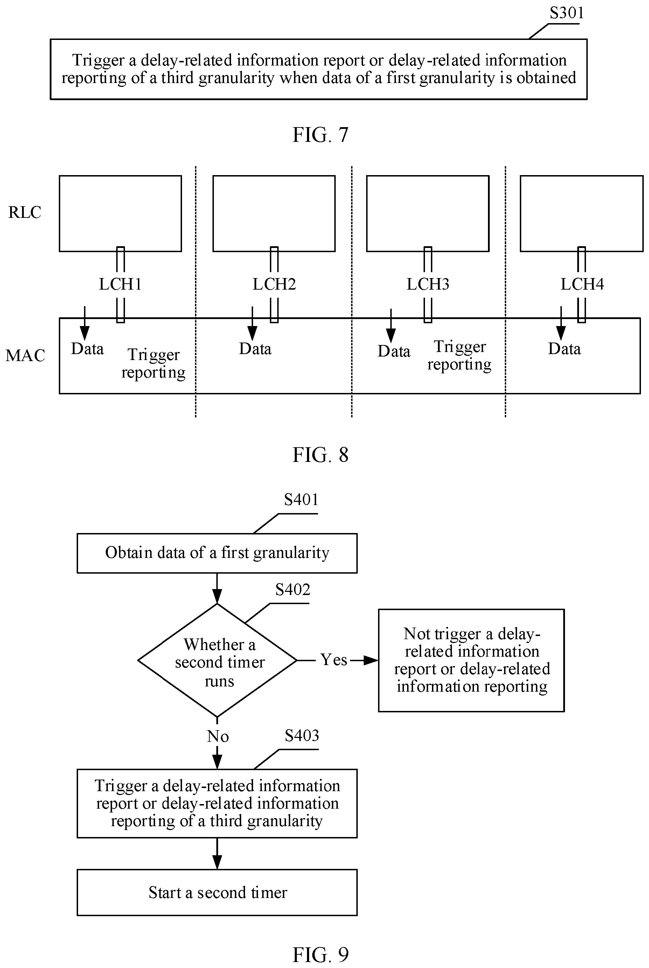

FIG. 7 is a flowchart of determining, according to a data arrival, whether to trigger a delay-related information report or delay-related information reporting according to an embodiment of this application.

S301: Trigger a delay-related information report or delay-related information reporting of a third granularity when data of a first granularity is obtained.

In an implementation, the first granularity is an RLC entity or an LCH, or an RLC entity group or an LCH group, or a data burst, or a PDU set, or a DRB, or a QoS flow, or a PDU, or an SDU. The data includes at least one SDU or PDU.

In an implementation, the first granularity is the same as the third granularity. In an implementation, the first granularity is different from the third granularity. In an implementation, the first granularity is included in the third granularity. The third granularity further includes a plurality of other first granularities. In an implementation, obtaining first data of the first granularity includes that there is data arriving at or is available for the first granularity.

The time-related information includes at least one piece of the following information: duration of a first timer, where the first timer is started when a second granularity is obtained; a sum of the duration of the first timer and first duration; caching duration of a packet of the first granularity; state information of the first timer; a first timestamp, where the first timestamp is a timestamp when the second granularity is obtained; a difference between current time information and the first timestamp; a sum of the first timestamp and first information; and the current time information. For the foregoing time-related information, specifically refer to an introduction in S101. Details are not described herein again.

In an implementation, the first granularity is the same as the second granularity. In an implementation, the first granularity is different from the second granularity. Optionally, the first granularity includes the second granularity.

In an implementation, the delay-related information is the same as the time-related information, that is, after triggering, the sending end directly sends the obtained time-related information to the receiving end, to indicate a remaining delay of the packet. In an implementation, the delay-related information is different from the time-related information. The delay-related information may be determined according to time. That is, after triggering, the sending end obtains the delay-related information through calculation or processing according to the obtained time-related information, and then sends the foregoing delay-related information to the receiving end.

In an implementation, the duration of the first timer is duration from starting to stopping or ending of the first timer, or the duration of the first timer is duration configured by the first timer, or the duration of the first timer is duration of running or starting of the first timer. The first duration is a configured or received threshold or fixed value. Configuring refers to that the receiving end 20 configures the first duration, and receiving refers to that an entity (a protocol layer) of the sending end 10 receives the first duration sent by another entity (a protocol layer), or receives the first information sent by the receiving end 20. In an implementation, the caching duration of the packet of the first granularity is duration that the packet arrives at a protocol layer of the sending end and then is transmitted to a next layer, or the caching duration of the packet of the first granularity is duration that a protocol layer of the sending end receives the packet and then transmits the packet to a next layer. In an implementation, the caching duration of the packet of the first granularity is duration from starting to ending of the first timer, or a time difference between the first timestamp and a second timestamp.

For example, a first protocol layer may perform a method shown in S301. The first protocol layer may trigger the delay-related information report or the delay-related information reporting of the third granularity when an LCH obtains a data arrival.

In an embodiment, S301 further includes: obtaining whether a second object is configured with a delay-related information report or delay-related information reporting; and the triggering a delay-related information report or delay-related information reporting of a third granularity when data of a first granularity is obtained specifically includes: triggering the delay-related information report or the delay-related information reporting of the first granularity when the data of the first granularity is obtained, and the second object is configured with the delay-related information report or the delay-related information reporting.

In an implementation, the delay-related information report or the delay-related information reporting of the first granularity is not triggered when the data of the first granularity is obtained, but the second object is not configured with the delay-related information report or the delay-related information reporting.

In an implementation, the second object includes at least one of an entity, a protocol layer, a path, a link, a channel, a bearer, and a set. Optionally, the first granularity includes at least one second object. Optionally, the first granularity may be the second object.

For example, the first protocol layer entity may be configured with the delay-related information report or the delay-related information reporting or not be configured with the delay-related information report or the delay-related information reporting. The first protocol layer entity configured with the delay-related information report or the delay-related information reporting may trigger the delay-related information report or the delay-related information reporting of the third granularity when obtaining the data of the first granularity. The first protocol layer entity not configured with the delay-related information report or the delay-related information reporting does not trigger the delay-related information report or the delay-related information reporting of the third granularity when obtaining the data of the first granularity.

Referring to FIG. 8, paths LCH1 to LCH4 are included between the RLC and the MAC. MAC entities corresponding to the LCH1 and the LCH3 are configured with the delay-related information report or the delay-related information reporting, and MAC entities corresponding to the LCH2 and the LCH4 are not configured with the delay-related information report or the delay-related information reporting. Corresponding MAC entities may trigger the delay-related information report or the delay-related information reporting in a case that the LCH1 and the LCH3 receive data. The MAC entities corresponding to the LCH2 and the LCH4 do not trigger the delay-related information report or the delay-related information reporting after receiving the data because of not being configured with the delay-related information report or the delay-related information reporting.

**Method 4: Determine, according to a data arrival and a second timer, whether to trigger a delay-related information report or delay-related information reporting.**

Referring to the triggering the delay-related information report or the delay-related information reporting shown in Method 3, the delay-related information report or the delay-related information reporting will be triggered when data of a first granularity is obtained, which may cause repeated reporting of corresponding delay-related information. A network load is increased. In this case, to avoid a problem of repeated reporting, a first protocol layer may set a second timer to limit repeated uploading.

For example, the first protocol layer may start the second timer after obtaining the data of the first granularity and triggering the delay-related information report or the delay-related information reporting according to the data. When the data of the first granularity is obtained next time, the first protocol layer does not trigger the delay-related information report or the delay-related information reporting if the second timer is stops/times out.

FIG. 9 is a flowchart of determining, according to a data arrival and a second timer, whether to trigger a delay-related information report or delay-related information reporting according to an embodiment of this application.

S401: Obtain data of a first granularity. Refer to an introduction in S101. Details are not described herein again.

S402: Obtain whether a second timer runs.

Triggering the delay-related information report or the delay-related information reporting is supported when the second timer stops, does not run, or times out, and triggering the delay-related information report or the delay-related information reporting is not supported when the second timer runs. In some embodiments, the second timer is configured based on the first granularity.

Referring to an LCH1 and an LCH2 in FIG. 8, the LCH1 may correspond to a second timer, and the LCH2 may correspond to a second timer. A MAC entity corresponding to the LCH1 may obtain whether the second timer corresponding to the LCH1 runs. A MAC entity corresponding to the LCH2 may obtain whether the second timer corresponding to the LCH2 runs.

In an implementation, the LCH1 and the LCH2 belong to an LCG. The LCG corresponds to a second timer. The MAC entity corresponding to the LCH1 will obtain whether the second timer corresponding to the LCG runs when obtaining whether the second timer runs. The MAC entity corresponding to the LCH2 will further obtain whether the second timer corresponding to the LCG runs when obtaining whether the second timer runs.

S403: Trigger a delay-related information report or delay-related information reporting of a third granularity when the data of the first granularity is obtained, and the second timer stops, does not run, or times out.

In some embodiments, when the first granularity is different from the third granularity, the second timer may alternatively be configured based on the third granularity. The first protocol layer may trigger the delay-related information report or the delay-related information reporting of the third granularity when the first protocol layer obtains the data of the first granularity and the corresponding second timer stops, does not run, or times out. The MAC entity corresponding to the LCH1 may trigger the delay-related information report or the delay-related information reporting when the LCH1 obtains the data, and obtains that the second timer corresponding to the LCH1 stops, does not run, or times out.

In some embodiments, the delay-related information report or the delay-related information reporting of the third granularity is not triggered when the data of the first granularity is obtained but the second timer runs. For example, the MAC entity corresponding to the LCH1 does not trigger the delay-related information report or the delay-related information reporting when the LCH1 obtains the data, but the second timer corresponding to the LCH1 is still running, thereby avoiding repeated reporting.

In some embodiments, the first protocol layer does not trigger the delay-related information report or the delay-related information reporting when obtaining that the second timer is still running, and the first protocol layer still does not trigger when the second timer stops. In this case, the data may stay for a longer time, affecting communication quality. In some embodiments, the second timer is waited to stop when the data of the first granularity is obtained and the second timer runs; and the delay-related information report or the delay-related information reporting of the third granularity is triggered after the second timer stops. For example, the MAC entity corresponding to the LCH1 does not trigger the delay-related information report or the delay-related information reporting when the LCH1 obtains the data, but the second timer corresponding to the LCH1 is still running, and the MAC entity may trigger the delay-related information report or the delay-related information reporting after the second timer corresponding to the LCH1 stops.

After triggering, the second timer is restarted. In this way, when data arrives again, the second timer runs to avoid triggering reporting again. The second timer stops or times out after preset timing duration ends. In this case, when data arrives again, triggering of the delay-related information report or the delay-related information reporting will not be prevented when the second timer stops or times out.

For example, the protocol layer does not trigger the delay-related information report or the delay-related information reporting when the protocol layer receives the data of the first granularity and whether the second timer runs. The protocol layer triggers the delay-related information report or the delay-related information reporting when obtaining that the second timer is turned off/does not run/stops/times out. The second timer may be restarted after triggering the delay-related information report or the delay-related information reporting. In this way, a sending end 10 may limit a plurality of times of triggering of the delay-related information report or the delay-related information reporting, thereby avoiding reporting redundancy and resource waste.

In some embodiments, before S403, the sending end 10 may further obtain whether the second object is configured with the delay-related information report or the delay-related information reporting. In this case, S403 specifically includes: triggering the delay-related information report or the delay-related information reporting of the third granularity when the data of the first granularity is obtained, the second object is configured with the delay-related information report or the delay-related information reporting, and the second timer stops, does not run, or times out.

In some embodiments, the delay-related information report or the delay-related information reporting of the third granularity is not triggered when the data of the first granularity is obtained, and the second timer stops, does not run, or times out, but the second object is not configured with the delay-related information report or the delay-related information reporting.

In some embodiments, the delay-related information report or the delay-related information reporting of the third granularity is not triggered when the data of the first granularity is obtained, the second object is configured with the delay-related information report or the delay-related information reporting, but the second timer runs.

In some embodiments, the second timer is waited to stop when the data of the first granularity is obtained, the second object is configured with the delay-related information report or the delay-related information reporting, and the second timer runs; and the delay-related information report or the delay-related information reporting of the third granularity is triggered after the second timer stops.

**Method 5: Determine, according to a data arrival and granularity priority, whether to trigger a delay-related information report or delay-related information reporting.**

In some embodiments, one or more objects may be prioritized. The object includes an entity, a protocol layer, a path, a link, and the like. After a delay-related information report or delay-related information reporting is triggered once, and when data arrives at a high-priority object, the high-priority object may trigger the delay-related information report or the delay-related information reporting. When data arrives at a non-high-priority object, the non-high-priority object cannot trigger the delay-related information report or the delay-related information reporting. In this way, a problem of prohibiting repeated reporting may be implemented, and triggering of delay-related information reporting corresponding to data with high priority can be met with reference to priority of the data.

A specific method is as follows:
in some embodiments, the delay-related information report or the delay-related information reporting is triggered when the data of the first granularity is obtained, and priority of the first granularity is higher than priority of another first granularity in a third granularity. In some embodiments, the delay-related information report or the delay-related information reporting is not triggered when the data of the first granularity is obtained and the priority of the first granularity is lower than or equal to the priority of at least one first granularity in the third granularity.

For example, both a first path and a second path in a sending end 10 may detect a data arrival, and determine, according to a state of the second timer, whether to trigger the delay-related information report or the delay-related information reporting. The priority of the second path is higher than that of the first path. At a time, after the first path triggers the delay-related information report or the delay-related information reporting, and if the second path obtains the data, in this case, the second path may trigger the delay-related information report or the delay-related information reporting again. The priority of the second path is higher than that of the first path. In another example, if the third path (with priority less than that of the first path) obtains the data, in this case, the third path does not trigger the delay-related information report or the delay-related information reporting.

Further, when the priority of the first granularity is higher than the priority of another first granularity in the third granularity, there is data in the another first granularity. That is, the delay-related information report or the delay-related information reporting is triggered when the data of the first granularity is obtained, and the priority of the first granularity is higher than that of the another first granularity that has data in the third granularity. That there is data in another first granularity includes that the first granularity that reported the time-related information previously does not transmit the data, and the data is still cached in the granularity.

Further, the method for determining, according to a data arrival and granularity priority, to trigger the delay-related information report or the delay-related information reporting shown in Method 5 may further be combined with whether the delay-related information report or the delay-related information reporting is configured and whether the second timer runs.

In some embodiments, the delay-related information report or the delay-related information reporting is triggered when the data of the first granularity is obtained, the second object is configured with the delay-related information report or the delay-related information reporting, and the priority of the first granularity is higher than the priority of another first granularity in the third granularity. In some embodiments, the delay-related information report or the delay-related information reporting is not triggered when the data of the first granularity is obtained, but the second object is not configured with the delay-related information report or the delay-related information reporting, and the priority of the first granularity is higher than the priority of another first granularity in the third granularity.

For example, a first path may trigger the delay-related information reporting or the delay-related information reporting when the first path obtains the data of the first granularity, the first path or a next protocol layer entity is configured with the delay-related information report or the delay-related information reporting, and granularity priority of the first path is higher than that of another path.

In some embodiments, the delay-related information report or the delay-related information reporting is not triggered when the data of the first granularity is obtained, the second object is configured with the delay-related information report or the delay-related information reporting, and the priority of the first granularity is lower than or equal to the priority of the at least one first granularity in the third granularity. For example, the first path cannot trigger the delay-related information report or the delay-related information reporting if the first path obtains the data of the first granularity, and the first path or a next protocol layer entity is configured with the delay-related information report or the delay-related information reporting, but granularity priority of the first path is not higher than that of another path.

In some embodiments, the delay-related information report or the delay-related information reporting of the third granularity is triggered when the data of the first granularity is obtained, the second timer stops, does not run, or times out, and the priority of the first granularity is higher than the priority of another first granularity in the third granularity.

In some embodiments, the delay-related information report or the delay-related information reporting of the third granularity is not triggered when the data of the first granularity is obtained, the second timer stops, does not run, or times out, and the priority of the first granularity is lower than or equal to the priority of at least one first granularity in the third granularity.

In some embodiments, the second timer is stopped, and the delay-related information report and the delay-related information reporting of the third granularity is triggered when the data of the first granularity is obtained, the second timer runs, and the priority of the first granularity is higher than the priority of the another first granularity in the third granularity.

In this way, after the delay-related information report or the delay-related information reporting is triggered once and the second timer is started, the delay-related information report or the delay-related information reporting is triggered only when data arrives at a granularity with a higher priority.

In some embodiments, the delay-related information report or the delay-related information reporting of the third granularity is triggered when the data of the first granularity is obtained, the second object is configured with the delay-related information report or the delay-related information reporting, the second timer stops, does not run, or times out, and the priority of the first granularity is higher than the granularity of the another first granularity in the third granularity.

In some embodiments, the delay-related information report or the delay-related information reporting of the third granularity is not triggered when the data of the first granularity is obtained, the second object is configured with the delay-related information report or the delay-related information reporting, the second timer stops, does not run, or times out, and the priority of the first granularity is lower than or equal to the priority of the at least one first granularity in the third granularity.

In some embodiments, the second timer is stopped, the delay-related information report or the delay-related information reporting of the third granularity is triggered when the data of the first granularity is obtained, the second object is configured with the delay-related information report or the delay-related information reporting, the second timer runs, and the priority of the first granularity is higher than the priority of the another first granularity in the third granularity.

For example, an LCH1 and an LCH3 shown in FIG. 8 belong to an LCG: an LCG1 (configured with a delay-related information report or delay-related information reporting); and an LCH2 and an LCH4 may be referred to as an LCG: an LCG2 (not configured with the delay-related information report or the delay-related information reporting). The LCH1 and the LCH3 in the LCG1 share a second timer timer1. The LCH is a first granularity, and the LCG is a third granularity.

In the LCG1, for example, granularity priority of the LCH3 is higher than that of the LCH1. A MAC entity corresponding to the LCH1 does not trigger the delay-related information report or the delay-related information reporting when the LCH1 obtains data. A MAC entity corresponding to the LCH3 triggers the delay-related information report or the delay-related information reporting when the LCH3 obtains data. Further, the MAC entity corresponding to the LCH3 triggers the delay-related information report or the delay-related information reporting when the LCH3 obtains the data, and the timer1 stops, does not run, or times out.

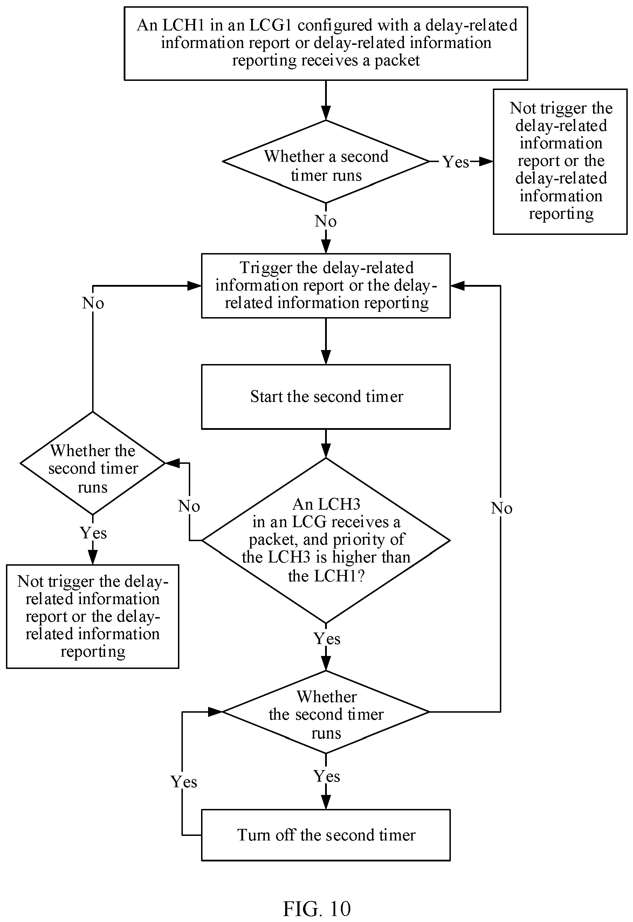

Specifically, FIG. 10 is a flowchart of determining, according to a data arrival and granularity priority, whether to trigger a delay-related information report or delay-related information reporting according to an embodiment of this application.

As shown in FIG. 10, a MAC entity corresponding to an LCH1 in an LCG1 configured with the delay-related information report or the delay-related information reporting may receive data through the LCH1. The MAC entity corresponding to the LCH1 may determine whether a second timer timer1 corresponding to the LCG1 runs. When running, the delay-related information report or the delay-related information reporting is not triggered. On the contrary, when the second timer stops, does not run, or times out, the delay-related information report or the delay-related information reporting is triggered. After triggering, the timer1 runs again.

At a time after the timer1 is started, the MAC entity corresponding to the LCH3 may receive data through the LCH3. When the timer stops, does not run, or times out, the MAC entity corresponding to the LCH3 may trigger the delay-related information report or the delay-related information reporting. Because the priority of the LCH3 is higher than that of the LCH1, when the timer runs, the timer1 may stop, does not run, or times out, and the MAC entity corresponding to the LCH3 may trigger the delay-related information report or the delay-related information reporting. The MAC entity corresponding to the LCH3 does not trigger the delay-related information report or the delay-related information reporting when the priority of the LCH3 is lower than or equal to that of the LCH1 and the timer1 runs.

**Method 6: Determine, according to a data arrival and a previous data arrival state, whether to trigger a delay-related information report or delay-related information reporting.**

In some embodiments, an object such as an entity, a protocol layer, a path, and a link in a sending end 10 may detect whether there is data previously when the data is obtained. The object may trigger the delay-related information report or the delay-related information reporting when the object does not receive the data within a period of time before obtaining the data.

A specific method is as follows:
In some embodiments, the delay-related information report or the delay-related information reporting of a third granularity is triggered when a first granularity corresponding to the third granularity does not have data and when the data of the first granularity is obtained. In some embodiments, the delay-related information report or the delay-related information reporting of the first granularity is not triggered when the first granularity corresponding to the third granularity has data and when the data of the first granularity is obtained.

In an implementation, that there is no data arriving at the third granularity previously includes that there is no data arriving at or available for all entities, paths, and links of the third granularity. In an implementation, that there is no data arriving at the third granularity previously includes that there is no data arriving at or available for one or more entities, paths, and links of the third granularity.

For example, a first protocol layer entity does not receive the data within first preset duration. In this case, the first protocol layer entity may trigger the delay-related information report or the delay-related information reporting when the first protocol layer entity obtains the data. For example, there is no data arriving at an LCH1 and/or an LCH3 within a period of time, in this case, when the LCH1 and/or the LCH3 receives data of the first granularity, a MAC entity corresponding to the LCH1 or a MAC entity corresponding to the LCH3 may trigger the delay-related information report or the delay-related information reporting of the third granularity.

In some embodiments, in a scenario where a plurality of first protocol layer entities all receive data within the first preset duration, when a first protocol layer entity obtains the data, the first protocol layer entity may trigger the delay-related information report or the delay-related information reporting. If one protocol layer entity has received data within the first preset duration, the foregoing first protocol layer entity that obtains the data does not trigger the delay-related information report or the delay-related information reporting.

Further, the method shown in Method 6 may further be combined with whether the delay-related information report or the delay-related information reporting is configured and whether the second timer runs. Details are as follows. Details are not described herein again.

In some embodiments, whether the first granularity corresponding to the third granularity has data is obtained. The delay-related information report or the delay-related information reporting of the first granularity is triggered when the first granularity corresponding to the third granularity does not have data, the data of the first granularity is obtained, and the second object is configured with the delay-related information report or the delay-related information reporting. The delay-related information report or the delay-related information reporting of the first granularity is not triggered when the data of the first granularity is obtained, but the second object is not configured with the delay-related information report or the delay-related information reporting.

In some embodiments, the delay-related information report or the delay-related information reporting of the third granularity is triggered when the first granularity corresponding to the third granularity does not have no data, the data of the first granularity is obtained, and the second timer stops, does not run, or times out. In some embodiments, the delay-related information report or the delay-related information reporting of the third granularity is not triggered when the first granularity corresponding to the third granularity does not have data, and when the data of the first granularity is obtained and the second timer runs.

In some embodiments, when the first granularity corresponding to the third granularity does not have data, and when the data of the first granularity is obtained, and the second object is configured with the delay-related information report or the delay-related information reporting, and the second timer stops, does not run, or expires, the delay-related information report or the delay-related information reporting of the third granularity is triggered.

**Method 7. Indicate first indication information and/or second indication information.**

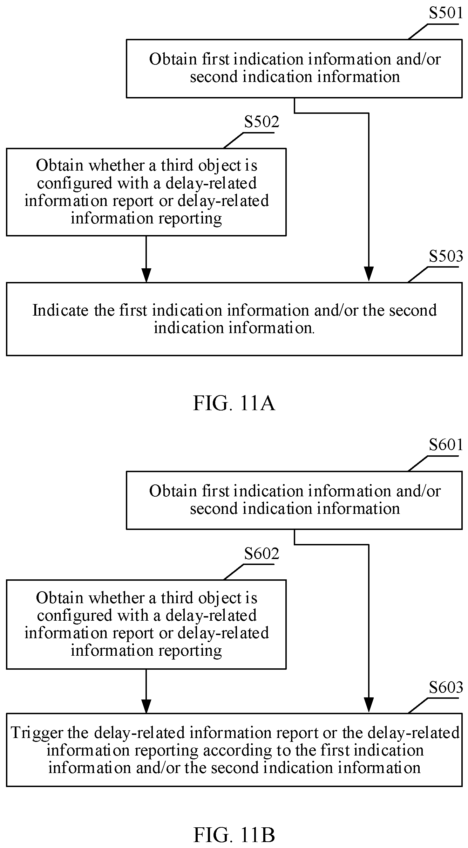

FIG. 11A is a flowchart of indicating first indication information and/or second indication information according to an embodiment of this application.

S501: Obtain first indication information and/or second indication information.

A first protocol layer may obtain the first indication information and/or the second indication information. For example, referring to FIG. 3C, an RLC may obtain the first indication information indicated by a PDCP. Referring to FIG. 3D, a MAC may obtain the first indication information indicated by the RLC.

The first indication information is used to indicate a first condition or that time-related information satisfies the first condition; and the second indication information is used to indicate to trigger the delay-related information report or the delay-related information reporting.

In an optional implementation, the first condition is at least one of the following: the time-related information is greater than or equal to a first threshold; an interval between second information and the time-related information is less than or equal to a second threshold; the time-related information reaches a time indicated by second time information, where the second time information is obtained based on a timestamp when the second granularity is obtained and/or a third threshold; the time-related information is greater than or equal to the second time information; an interval between the time-related information and the second time information is less than or equal to the second threshold; and the time-related information stops or times out.

The time-related information includes at least one piece of the following information: duration of a first timer, where the first timer is started when a second granularity is obtained; a sum of the duration of the first timer and first duration; caching duration of a packet of the first granularity; state information of the first timer; a first timestamp, where the first timestamp is a timestamp when the second granularity is obtained; a difference between current time information and the first timestamp; a sum of the first timestamp and first information; and the current time information. Specifically refer to introductions in S101 and S102. Details are not described herein again.

The first granularity is an RLC entity or an LCH, or an RLC entity group or an LCH group, or a data burst, or a PDU set, or a DRB, or a QoS flow, or a PDU, or an SDU. The second granularity includes the first granularity.

S502: Obtain whether a third object is configured with a delay-related information report or delay-related information reporting. An execution sequence of S501 and S503 is not limited in this embodiment of this application. S502 is optional.

In an implementation, the third object is at least one of an entity, a protocol layer, a path, a link, a channel, a bearer, and a set.

For example, after obtaining the first indication information and/or the second indication information, the first protocol layer may indicate the first indication information and/or the second indication information to the second protocol layer. The foregoing second protocol layer may be a third object. In this case, the first protocol layer may obtain whether the second protocol layer entity is configured with the delay-related information report or the delay-related information reporting. For example, the PDCP may further indicate the first indication information indicated by an SDAP to the RLC. The PDCP may obtain whether the RLC is configured with the delay-related information report or the delay-related information reporting. The RLC may further indicate the first indication information indicated by the PDCP to a MAC. The RLC may obtain whether the MAC is configured with the delay-related information report or the delay-related information reporting.

In some embodiments, the obtaining whether a third object is configured with a delay-related information report or delay-related information reporting specifically includes: determining, according to configuration information, whether the third object is configured with the delay-related information report or the delay-related information reporting, and/or determining, according to configuration state information sent by the third object, whether the third object is configured with the delay-related information report or the delay-related information reporting. Specifically refer to an introduction in S202. Details are not described herein again.

S503: Indicate first indication information and/or second indication information.

Under a condition of obtaining that the second protocol layer entity is configured with the delay-related information report or the delay-related information reporting, the first protocol layer entity may indicate the obtained first indication information and/or second indication information to the second protocol layer entity. Under a condition of obtaining that the second protocol layer entity is not configured with the delay-related information report or the delay-related information reporting, the first protocol layer entity may not indicate the first indication information and/or the second indication information.

Similarly, the method for indicating the first indication information and/or the second indication information shown in Method 7 may further be combined with whether the second timer runs. For example, in some embodiments, S503 further includes: indicating the first indication information and/or the second indication information when the second timer stops, does not run, or times out. For example, the first protocol layer may indicate the obtained first indication information and/or second indication information to the second protocol layer when obtaining that the second timer corresponding to the first protocol layer stops, does not run, or times out.

Further, in some embodiments, S503 further includes: indicating the first indication information and/or the second indication information when the second timer stops, does not run, or times out and the third object is configured with the delay-related information report or the delay-related information reporting. For example, the first protocol layer may indicate the obtained first indication information and/or second indication information to the second protocol layer when obtaining that the second protocol layer entity is configured with the delay-related information report or the delay-related information reporting, and the second timer corresponding to the first protocol layer stops, does not run, or times out.

In some embodiments, the foregoing method further includes: the second timer is stopped according to the first indication information and/or the second indication information and the first indication information and/or the second indication information is indicated when the second timer runs. For example, the first protocol layer may stop the second timer, and then indicate the obtained first indication information and/or the second indication information to the second protocol layer when obtaining that the second timer corresponding to the first protocol layer is running.

In some embodiments, the foregoing method further includes: the second timer is stopped according to the first indication information and/or the second indication information and the first indication information and/or the second indication information is indicated when the second timer runs, and the third object is configured with the delay-related information report or the delay-related information reporting. For example, the first protocol layer may stop the second timer, and then the obtained first indication information and/or second indication information is indicated to the second protocol layer entity when obtaining that the second protocol layer entity is configured with the delay-related information report or the delay-related information reporting, and the second timer corresponding to the first protocol layer is running.

**Method 8. Trigger delay-related information report or the delay-related information reporting according to the first indication information and/or the second indication information.**

FIG. 11B is a flowchart of triggering a delay-related information report or delay-related information reporting according to first indication information and/or second indication information according to an embodiment of this application.

S601: Obtain first indication information and/or second indication information.

S602: Obtain whether a third object is configured with a delay-related information report or delay-related information reporting. An execution sequence of S601 and S603 is not limited in this embodiment of this application. S602 is optional. For steps S601 and S602, refer to introductions of S501 and S502. Details are not described herein again.

S603: Trigger the delay-related information report or the delay-related information reporting according to the first indication information and/or the second indication information.

Under conditions that the first indication information and/or the second indication information is obtained, and the second protocol layer is configured with the delay-related information report or the delay-related information reporting, the first protocol layer may trigger the delay-related information report or the delay-related information reporting according to the first indication information and/or the second indication information. Under conditions that the first indication information and/or the second indication information is obtained, but the second protocol layer is not configured with the delay-related information report or the delay-related information reporting, the first protocol layer may not trigger the delay-related information report or the delay-related information reporting.

Referring to FIG. 3A to FIG. 3C, the RLC may obtain the first indication information and/or the second indication information from the PDCP. The RLC may trigger the delay-related information report or the delay-related information reporting according to the first indication information and/or the second indication information. Referring to FIG. 3D, the MAC may obtain the first indication information and/or the second indication information from the RPL. After obtaining the first indication information and/or the second indication information, the MAC may trigger the delay-related information report or the delay-related information reporting according to the first indication information and/or the second indication information.

Similarly, the method for indicating the first indication information and/or the second indication information shown in Method 8 may further be combined with whether the second timer runs. Details are as follows:

in some embodiments, S603 further includes: triggering the delay-related information report or the delay-related information reporting according to the first indication information and/or the second indication information when the second timer stops, does not run, or times out For example, the first protocol layer may trigger the delay- related information report or the delay-related information reporting according to the first indication information and/or the second indication information when the first indication information and/or the second indication information is obtained, and the second timer corresponding to the first protocol layer stops, does not run, or times out.

Further, in some embodiments, S603 further includes: triggering the delay-related information report or the delay-related information reporting according to the first indication information and/or the second indication information when the second timer stops, does not run, or times out, and the third object is configured with the delay-related information report or the delay-related information reporting; and For example, the first protocol layer may trigger the delay-related information report or the delay-related information reporting according to the first indication information and/or the second indication information when the first protocol layer obtains the first indication information and/or the second indication information, the corresponding second timer stops, does not run, or times out, and the second protocol layer entity is configured with the delay-related information report or the delay-related information reporting.

In some embodiments, S603 further includes: stopping the second timer according to the first indication information and/or the second indication information and triggering the delay-related information report or the delay-related information reporting when the second timer runs. For example, the first protocol layer may stop the second timer when the first indication information and/or the second indication information is obtained and the second timer corresponding to the first protocol layer runs, and the delay-related information report or the delay-related information reporting according to the first indication information and/or the second indication information.

In some embodiments, S603 further includes: stopping the second timer and triggering the delay-related information report or the delay-related information reporting according to the first indication information and/or the second indication information when the second timer runs and the third object is configured with the delay-related information report or the delay-related information reporting. For example, the first protocol layer may trigger the delay-related information report or the delay-related information reporting according to the first indication information and/or the second indication information when the first protocol layer obtains the first indication information and/or the second indication information, the corresponding second timer stops, does not run, or times out, and the second protocol layer entity is configured with the delay-related information report or the delay-related information reporting.

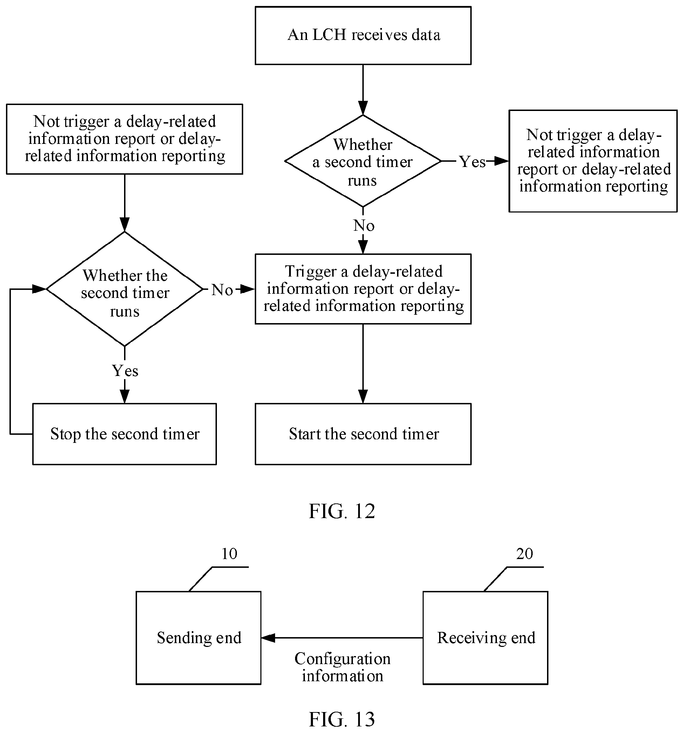

For example, FIG. 12 is a flowchart of a specific embodiment of triggering a delay-related information report or delay-related information reporting according to first indication information and/or second indication information according to an embodiment of this application.

As shown in FIG. 12, a MAC entity corresponding to an LCH may obtain whether a second timer runs when receiving an indication (that is, the first indication information) for a high layer (for example, an RLC and a PDCP) to trigger the delay-related information report or the delay-related information reporting. The MAC entity corresponding to the LCH may trigger the delay-related information report or the delay-related information reporting when the second timer stops, does not run, or times out. The MAC entity corresponding to the LCH may stop the second timer, and then trigger the delay-related information report or the delay-related information reporting when the second timer runs.

In some embodiments, the method further includes: whether a granularity corresponding to the first indication information and/or the second indication information has reported time-related information. The delay-related information report or the delay-related information reporting is triggered according to the first indication information and/or the second indication information when the granularity corresponding to the first indication information and/or the second indication information has not reported the time-related information.

In some embodiments, the method further includes: the delay-related information report or the delay-related information reporting is triggered according to the first indication information and/or the second indication information when a third object is configured with the delay-related information report or the delay-related information reporting, and the granularity corresponding to the first indication information and/or the second indication information has not reported the time-related information.

**Method 9. Transmit configuration information.**

FIG. 13 is a method for transmitting configuration information according to an embodiment of this application.

As shown in FIG. 13, a receiving end 20 may send configuration information. The configuration information includes at least one of the following: first granularity information, third indication information, first duration, first threshold, second threshold, third threshold, second information, timer information, granularity priority information, and indication information of starting to report a delay.

The first granularity information is used to indicate a first granularity. The third indication information is used to indicate whether a delay-related information report or delay-related information reporting is configured. In an implementation, the third indication information is specifically used to indicate whether the first granularity is configured with the delay-related information report or the delay-related information reporting. The timer information is used to indicate to configure a first timer and/or a second timer. The granularity priority information is used to indicate priority of one or more sub-granularities in a granularity. The indication information of starting to report a delay is used to indicate to start a method for triggering the delay-related information report or the delay-related information reporting.

The sending end 10 may obtain whether to trigger the delay-related information report or the delay-related information reporting by using the foregoing configuration information. The sending end 10 may send time-related information to a receiving end 20 after triggering the delay-related information report or the delay-related information reporting.

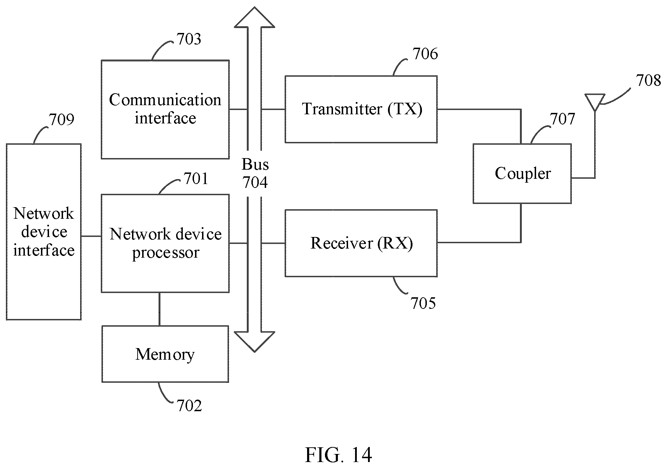

A structure of a network device according to an embodiment of this application is introduced below. The network device may server as a sending end 10, or may serve as a receiving end 20. FIG. 14 is an example of a structure of a network device according to an embodiment of this application.

As shown in FIG. 14, the network device may include: one or more network device processors 701, a memory 702, a communication interface 703, a receiver 705, a transmitter 706, a coupler 707, an antenna 708, and a network device interface 709. These components may be connected through a bus 704 or in another manner. An example in which these components are connected through the bus is used in FIG. 14.

The communication interface 703 may be configured for the network device to communicate with another communication device. For example, the network device serving as the sending end 10 may communicate with the communication interface 703 and the receiving end 20. Specifically, the communication interface 703 may be a 5G communication interface, or may be a communication interface of a future new radio. Not limited to a wireless communication interface, the network device may further be configured with a wired communication interface 703, for example, a local access network (LAN) interface. The transmitter 706 may be configured to transmit a signal output by the network device processor 701. The receiver 705 may be configured to receive a mobile communication signal received by the antenna 708.

In some embodiments of this application, the transmitter 706 and the receiver 705 may be considered as a wireless modem. In the network device, there may be one or more transmitters 706 and receivers 705. The antenna 708 may be configured to convert electromagnetic energy on a transmission line into an electromagnetic wave in free space, or convert an electromagnetic wave in free space into electromagnetic energy on a transmission line. The coupler 707 is configured to divide the mobile communication signal received by the antenna 708 into a plurality of signals, and allocate the plurality of signals to a plurality of receivers 705.

The memory 702 is coupled to the network device processor 701, and is configured to store various software programs and/or a plurality of sets of instructions. Specifically, the memory 702 may include a high-speed random access memory, and may further include a non-volatile memory, for example, one or more disk storage devices, a flash storage device, or another non-volatile solid-state storage device. The memory 702 may store a network communication program. The network communication program may be used to communicate with one or more additional devices, one or more user equipment, or one or more network devices.

In some embodiments of this application, the memory 702 may be configured to store a program corresponding to a method for triggering a delay-related information report or delay-related information reporting according to one or more embodiments of this application.

The network device processor 701 may be configured to read and execute computer-readable instructions. Specifically, the network device processor 701 may be configured to invoke a program stored in the memory 702, for example, the program corresponding to the method for triggering a delay-related information report or delay-related information reporting according to one or more embodiments of this application, and execute instructions included in the program.

It is to be noted that, the network device shown in FIG. 14 is merely an implementation of this embodiment of this application. In actual application, the network device may further include more or fewer components. This is not limited herein.

The singular expressions "one", "one type of", "the", "the foregoing", "this", and "this one" used in this specification and the appended claims of this application are also intended to include plural forms, unless otherwise specified in the context clearly. It is to be understood that the term "and/or" used in this application refers to and includes any or all possible combinations of one or more listed items. As used in the foregoing embodiments, based on the context, the term "when" may be interpreted as a meaning of "if", "after", "in response to determining... ", or "in response to detecting....". Similarly, based on the context, the phrase "when determining" or "if detecting (a stated condition or event)" may be interpreted as a meaning of "if determining... ", "in response to determining... ", "when detecting (a stated condition or event)", or "in response to detecting ... (a stated condition or event)".

All or some of the foregoing embodiments may be implemented through software, hardware, firmware, or their combinations. When implemented by using the software, all or some of the embodiments may be implemented in the form of a computer program product. The computer program product includes one or more computer instructions. When the computer program instructions are loaded and executed on a computer, all or some of the processes or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, through a coaxial cable, an optical fiber, or a digital subscriber line) or a wireless manner (for example, through infrared rays, radio, or microwave). The computer-readable storage medium may be any available medium accessible by a computer, or a data storage device such as a server or a data center integrated by one or more available media. The available medium may be a magnetic medium (for example, a soft disk, a hard disk, or a magnetic tape), an optical medium (for example, a DVD), a semiconductor medium (for example, a solid-state drive), or the like.

Persons of ordinary skill in the art may understand that all or part processes of the methods in the foregoing embodiments are implemented. The processes may be completed by a computer program instructing related hardware. The program may be stored in a computer-readable storage medium. When the program is executed, the processes in the foregoing method embodiments may be included. The foregoing storage medium includes: various media that can store program code, such as a ROM, a random access memory RAM, a magnetic disk, or an optical disk.

## Claims

1. A communication method, comprising:
obtaining time-related information of a first granularity;
obtaining whether the time-related information satisfies a first condition;
triggering a delay-related information report or delay-related information reporting when the time-related information satisfies the first condition; or generating or indicating first indication information when the time-related information satisfies the first condition, wherein the first indication information indicates the first condition or satisfies the first condition.

2. The method according to claim 1, wherein the time-related information comprises at least one piece of the following information:
duration of a first timer, wherein the first timer is started when a second granularity is obtained;
a sum of the duration of the first timer and first duration;
state information of the first timer;
a first timestamp, wherein the first timestamp is a timestamp when the second granularity is obtained;
a difference between current time information and the first timestamp;
a sum of the first timestamp and first information;
the current time information;
caching duration of a packet of the first granularity; and
maintenance duration of the packet of the first granularity.

3. The method according to claim 1 or 2, wherein the first condition is at least one of the following:
the time-related information is greater than or equal to a first threshold;
an interval between second information and the time-related information is less than or equal to a second threshold;
the time-related information reaches a time indicated by second time information, wherein the second time information is obtained based on a timestamp when the second granularity is obtained and/or a third threshold;
the time-related information is greater than or equal to the second time information;
an interval between the time-related information and the second time information is less than or equal to the second threshold; and
the time-related information stops or times out.

4. The method according to any one of claims 1 to 3, wherein after the triggering a delay-related information report or delay-related information reporting, the method further comprises: indicating second indication information, wherein the second indication information indicates to trigger the delay-related information report or the delay-related information reporting.

5. The method according to any one of claims 1 to 4, further comprising:
obtaining whether a first object is configured with a delay-related information report or delay-related information reporting;
the triggering the delay-related information report or the delay-related information reporting when the time-related information satisfies the first condition specifically comprises: triggering the delay-related information report or the delay-related information reporting when the time-related information satisfies the first condition and the first object is configured with the delay-related information report or the delay-related information reporting; and
the generating or indicating first indication information when the time-related information satisfies the first condition specifically comprises: generating or indicating the first indication information when the time-related information satisfies the first condition and the first object is configured with the delay-related information report or the delay-related information reporting.

6. The method according to claim 5, wherein the obtaining whether a first object is configured with a delay-related information report or delay-related information reporting specifically comprises: determining, through configuration information, whether the first object is configured with the delay-related information report or the delay-related information reporting, and/or, determining, through configuration state information indicated by the first object, whether the first object is configured with the delay-related information report or the delay-related information reporting.

7. The method according to claim 5 or 6, further comprising:
obtaining whether the packet of the first granularity is submitted to the first object; and
the obtaining whether a first object is configured with a delay-related information report or delay-related information reporting specifically comprises:
obtaining whether the first object is configured with the delay-related information report or the delay-related information reporting when the packet of the first granularity is submitted to the first object; or obtaining the first object and obtaining whether the first object is configured with the delay-related information report or the delay-related information reporting when the packet of the first granularity is not submitted to the first object.

8. The method according to any one of claims 5 to 7, further comprising: stopping the first timer after obtaining that the first object is not configured with the delay-related information report or the delay-related information reporting.

9. A communication method, comprising:
triggering a delay-related information report or delay-related information reporting of a third granularity when data of a first granularity is obtained.

10. The method according to claim 9, further comprising:
obtaining whether a second object is configured with a delay-related information report or delay-related information reporting; and
the triggering a delay-related information report or delay-related information reporting of a third granularity when data of a first granularity is obtained specifically comprises: triggering the delay-related information report or the delay-related information reporting of the first granularity when the data of the first granularity is obtained, and the second object is configured with the delay-related information report or the delay-related information reporting.

11. The method according to claim 9, further comprising:
determining whether a second timer runs, supporting triggering the delay-related information report or the delay-related information reporting when the second timer stops, does not run, or times out, and not supporting triggering the delay-related information report or the delay-related information reporting when the second timer runs; and
the triggering a delay-related information report or delay-related information reporting of a third granularity when data of a first granularity is obtained specifically comprises: triggering the delay-related information report or the delay-related information reporting of the third granularity when the data of the first granularity is obtained, and the second timer stops, does not run, or times out.

12. The method according to claim 10, further comprising:
determining whether a second timer runs, supporting triggering the delay-related information report or the delay-related information reporting when the second timer stops, does not run, or times out, and not supporting triggering the delay-related information report or the delay-related information reporting when the second timer runs; and
the triggering the delay-related information report or the delay-related information reporting of the first granularity when the data of the first granularity is obtained, and the second object is configured with the delay-related information report or the delay-related information reporting specifically comprises: triggering the delay-related information report or the delay-related information reporting of the third granularity when the data of the first granularity is obtained, the second object is configured with the delay-related information report or the delay-related information reporting, and the second timer stops, does not run, or times out.

13. The method according to claim 9, further comprising:
obtaining whether priority of the first granularity is higher than priority of another first granularity in the third granularity; and
the triggering a delay-related information report or delay-related information reporting of a third granularity when data of a first granularity is obtained specifically comprises: triggering the delay-related information report or the delay-related information reporting when the data of the first granularity is obtained, and the priority of the first granularity is higher than the priority of another first granularity in the third granularity.

14. The method according to claim 10, further comprising:
obtaining whether priority of the first granularity is higher than priority of another first granularity in the third granularity; and
the triggering the delay-related information report or the delay-related information reporting of the first granularity when the data of the first granularity is obtained, and the second object is configured with the delay-related information report or the delay-related information reporting specifically comprises: triggering the delay-related information report or the delay-related information reporting when the data of the first granularity is obtained, the second object is configured with the delay-related information report or the delay-related information reporting, and the priority of the first granularity is higher than the priority of another first granularity in the third granularity.

15. The method according to claim 11, further comprising:
obtaining whether priority of the first granularity is higher than priority of another first granularity in the third granularity; and
the triggering the delay-related information report or the delay-related information reporting of the third granularity when the data of the first granularity is obtained, and the second timer stops, does not run, or times out specifically comprises: triggering the delay-related information report or the delay-related information reporting of the third granularity when the data of the first granularity is obtained, the second timer stops, does not run, or times out, and the priority of the first granularity is higher than the priority of another first granularity in the third granularity.

16. The method according to claim 12, further comprising:
obtaining whether priority of the first granularity is higher than priority of another first granularity in the third granularity; and
the triggering the delay-related information report or the delay-related information reporting of the third granularity when the data of the first granularity is obtained, the second object is configured with the delay-related information report or the delay-related information reporting, and the second timer stops, does not run, or times out specifically comprises: triggering the delay-related information report or the delay-related information reporting of the third granularity when the data of the first granularity is obtained, the second object is configured with the delay-related information report or the delay-related information reporting, the second timer stops, does not run, or times out, and the priority of the first granularity is higher than the priority of the another first granularity in the third granularity.

17. The method according to claim 9, further comprising:
obtaining whether the first granularity corresponding to the third granularity has data; and
the triggering a delay-related information report or delay-related information reporting of a third granularity when data of a first granularity is obtained specifically comprises: triggering the delay-related information report or the delay-related information reporting of the third granularity when the first granularity corresponding to the third granularity does not have data, and when the data of the first granularity is obtained.

18. The method according to claim 10, further comprising:
obtaining whether the first granularity corresponding to the third granularity has data; and
the triggering the delay-related information report or the delay-related information reporting of the first granularity when the data of the first granularity is obtained, and the second object is configured with the delay-related information report or the delay-related information reporting specifically comprises: triggering the delay-related information report or the delay-related information reporting of the first granularity when the first granularity corresponding to the third granularity does not have data, the data of the first granularity is obtained, and the second object is configured with the delay-related information report or the delay-related information reporting.

19. The method according to claim 11, further comprising:
obtaining whether the first granularity corresponding to the third granularity has data; and
the triggering the delay-related information report or the delay-related information reporting of the third granularity when the data of the first granularity is obtained, and the second timer stops, does not run, or times out specifically comprises: triggering the delay-related information report or the delay-related information reporting of the third granularity when the first granularity corresponding to the third granularity does not have data, the data of the first granularity is obtained, and the second timer stops, does not run, or times out.

20. The method according to claim 12, further comprising:
obtaining whether the first granularity corresponding to the third granularity has data; and
the triggering the delay-related information report or the delay-related information reporting of the third granularity when the data of the first granularity is obtained, the second object is configured with the delay-related information report or the delay-related information reporting, and the second timer stops, does not run, or times out specifically comprises: triggering the delay-related information report or the delay-related information reporting of the third granularity when the first granularity corresponding to the third granularity does not have data, the data of the first granularity is obtained, the second object is configured with the delay-related information report or the delay-related information reporting, and the second timer stops, does not run, or times out.

21. A communication method, comprising:
indicating, when first indication information and/or second indication information is obtained, the first indication information and/or the second indication information, or triggering a delay-related information report or delay-related information reporting according to the first indication information and/or the second indication information; and
the first indication information is used to indicate a first condition or that time-related information satisfies the first condition; and the second indication information is used to indicate to trigger a delay-related information report or delay-related information reporting.

22. The method according to claim 21, wherein before indicating the first indication information and/or the second indication information, or triggering a delay-related information report or delay-related information reporting according to the first indication information and/or the second indication information, the method further comprises: determining that a third object is configured with the delay-related information report or the delay-related information reporting.

23. The method according to claim 21, further comprising:
determining whether a second timer runs, supporting triggering the delay-related information report or the delay-related information reporting when the second timer stops, does not run, or times out, and not supporting triggering the delay-related information report or the delay-related information reporting when the second timer runs;
the triggering a delay-related information report or delay-related information reporting according to the first indication information and/or the second indication information specifically comprises: triggering the delay-related information report or the delay-related information reporting according to the first indication information and/or the second indication information when the second timer stops, does not run, or times out; and
the indicating the first indication information and/or the second indication information specifically comprises: indicating the first indication information and/or the second indication information when the second timer stops, does not run, or times out.

24. The method according to claim 23, further comprising:
stopping the second timer according to the first indication information and/or the second indication information and triggering the delay-related information report or the delay-related information reporting when the second timer runs.

25. The method according to claim 22, further comprising:
determining whether a second timer runs, supporting triggering the delay-related information report or the delay-related information reporting when the second timer stops, does not run, or times out, and not supporting triggering the delay-related information report or the delay-related information reporting when the second timer runs;
the triggering a delay-related information report or delay-related information reporting according to the first indication information and/or the second indication information specifically comprises: triggering the delay-related information report or the delay-related information reporting according to the first indication information and/or the second indication information when the second timer stops, does not run, or times out, and the third object is configured with the delay-related information report or the delay-related information reporting; and
the indicating the first indication information and/or the second indication information specifically comprises: indicating the first indication information and/or the second indication information when the second timer stops, does not run, or times out and the third object is configured with the delay-related information report or the delay-related information reporting.

26. The method according to claim 25, further comprising:
stopping the second timer and triggering the delay-related information report or the delay-related information reporting according to the first indication information and/or the second indication information when the second timer runs and the third object is configured with the delay-related information report or the delay-related information reporting.

27. The method according to claim 21, further comprising:
obtaining whether a granularity corresponding to the first indication information and/or the second indication information has reported the time-related information; and
the triggering a delay-related information report or delay-related information reporting according to the first indication information and/or the second indication information specifically comprises: triggering the delay-related information report or the delay-related information reporting according to the first indication information and/or the second indication information when the granularity corresponding to the first indication information and/or the second indication information has not reported the time-related information.

28. The method according to claim 22, further comprising:
obtaining whether a granularity corresponding to the first indication information and/or the second indication information has reported the time-related information; and
the triggering a delay-related information report or delay-related information reporting according to the first indication information and/or the second indication information specifically comprises: triggering the delay-related information report or the delay-related information reporting according to the first indication information and/or the second indication information when the third object is configured with the delay-related information report or the delay-related information reporting, and the granularity corresponding to the first indication information and/or the second indication information has not reported the time-related information.

29. A communication method, applied to a sending end, comprising:
receiving configuration information, wherein
the configuration information comprises at least one of the following: first granularity information, third indication information, first duration, first threshold, second threshold, third threshold, second information, timer information, granularity priority information, and indication information of starting to report a delay.

30. A communication method, applied to a receiving end, comprising:
sending configuration information, wherein
the configuration information comprises at least one of the following: first granularity information, third indication information, first duration, first threshold, second threshold, third threshold, second information, timer information, granularity priority information, and indication information of starting to report a delay.

31. An electronic device, a user equipment, comprising: one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 30 is performed.

32. An electronic device, a network device, comprising: one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 30 is performed.

33. A chip system, applied to an electronic device, and comprising one or more processors, wherein the processor is configured to invoke computer instructions to perform the method according to any one of claims 1 to 30.

34. A computer-readable storage medium, comprising instructions, wherein when the instructions run on an electronic device, the method according to any one of claims 1 to 30 is performed.
